(19) Europäisches Patentamt
European Patent Office
Office européen des brevets

(11) **EP 4 583 601 A1**

(12) **EUROPEAN PATENT APPLICATION**
published in accordance with Art. 153(4) EPC

(43) Date of publication:
**09.07.2025 Bulletin 2025/28**

(21) Application number: **23870256.7**

(22) Date of filing: **08.09.2023**

(51) International Patent Classification (IPC):
*H04W 72/02* $^{(2009.01)}$

(52) Cooperative Patent Classification (CPC):
**H04W 72/02**

(86) International application number:
**PCT/CN2023/117640**

(87) International publication number:
**WO 2024/067017 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 CN 202211199994
04.11.2022 CN 202211377739**

(71) Applicant: **Huawei Technologies Co., Ltd.
Shenzhen, Guangdong 518129 (CN)**

(72) Inventors:
• **ZHANG, Yi
Shenzhen, Guangdong 518129 (CN)**
• **QI, Hong
Shenzhen, Guangdong 518129 (CN)**
• **SU, Hongjia
Shenzhen, Guangdong 518129 (CN)**
• **LU, Lei
80992 Duesseldorf (DE)**

(74) Representative: **Körber, Martin Hans
Mitscherlich PartmbB
Patent- und Rechtsanwälte
Karlstraße 7
80333 München (DE)**

(54) **COMMUNICATION METHOD, APPARATUS AND SYSTEM**

(57)    This application relates to the field of wireless communication, and provides a communication method and apparatus, and a system, to implement continuous data transmission, thereby improving transmission performance. The method includes: A terminal device determines an available resource set $S_A$ corresponding to N pieces of data, where $S_A$ is located in a resource selection window, N parameter sets correspond to the N pieces of data, data i corresponds to a parameter set i, N is a positive integer greater than 1, i is an integer greater than or equal to 0 and less than N, and the parameter set i includes at least one of the following parameters: a sending priority $prio_{TX,i}$, a data delay budget $PDB_i$, a frequency domain resource unit $L_{subCH,i}$, or a channel access priority class $CAPC_i$; and sends the N pieces of data on a resource in $S_A$.

S701: A terminal device obtains a data set, where each piece of data corresponds to one parameter set

S702: The terminal device determines an available resource set based on N parameter sets

S703: The terminal device reports the available resource set to a MAC layer, and the MAC layer selects a resource

S704: The terminal device sends N pieces of data on the selected resource

FIG. 7

**Description**

This application claims priorities to Chinese Patent Application No. 202211199994.5, filed with the China National Intellectual Property Administration on September 29, 2022 and entitled "COMMUNICATION METHOD AND APPARATUS, AND SYSTEM", and to Chinese Patent Application No. 202211377739.5, filed with the China National Intellectual Property Administration on November 4, 2022 and entitled "COMMUNICATION METHOD AND APPARATUS, AND SYSTEM", both of which are incorporated herein by reference in their entireties.

**TECHNICAL FIELD**

Embodiments of this application relate to the field of wireless communication, and in particular, to a communication method and apparatus, and a system.

**BACKGROUND**

Cellular vehicle-to-everything (Cellular Vehicle-To-Everything, C-V2X for short) communication is a V2X communication technology developed based on a cellular system. V2X communication has great potential in reducing vehicle collision accidents to further reduce a corresponding number of casualties. Further, a vehicle-to-vehicle communication technology supported by V2X may be further applied to device-to-device (Device-to-Device, D2D for short) communication in any system.

In a wireless communication system, used bands may be classified into licensed bands and unlicensed bands. In the licensed band, a user uses a spectrum resource based on scheduling of a central node. In the unlicensed band, a transmit node needs to use a spectrum resource through contention. Specifically, the transmit node contends for a channel through listen before talk LBT (Listen before Talk).

In a 3GPP NR system, in V2X SL of Rel-16, transmission is performed in a UE autonomous resource selection mode (mode 2), and a transmission resource does not depend on a base station. Specifically, a transmit end UE selects a transmission resource for communication in a resource selection window based on a result of performing sensing in a sensing window of the transmit end UE.

How to ensure that a transmit end device continuously occupies a channel resource for data transmission after obtaining a channel through contention, to improve a data transmission rate, reduce a risk that the transmit end device contends for a channel again because the channel is preempted by another user, and improve transmission performance is an urgent problem to be resolved.

**SUMMARY**

This application provides a communication method and apparatus, and a system. According to the method, continuous channel resources can be occupied for data transmission, to reduce a risk that a channel is preempted by another user and channel contention is performed again, and improve transmission performance.

A terminal device in embodiments of this application may be a device that implements a terminal function or a component (for example, a chip system) in a device.

According to a first aspect, this application provides a communication method. The method may include: A terminal device determines an available resource set $S_A$ based on N parameter sets, where $S_A$ is located in a resource selection window; and sends N pieces of data on a resource in $S_A$, where the N parameter sets correspond to the N pieces of data, data i corresponds to a parameter set i, N is a positive integer greater than 1, i is an integer greater than or equal to 0 and less than N, and the parameter set i includes at least one of the following parameters: a sending priority $prio_{Tx,i}$, a data delay budget $PDB_i$, a frequency domain resource unit $L_{subCH,i}$, or a channel access priority class $CAPC_i$.

In the communication method, a common available resource set $S_A$ is shared by a plurality of pieces of data, so that the terminal device selects continuous time units from the available resource set $S_A$ to perform transmission of the plurality of pieces of data. Therefore, continuous use of time units is improved, and a risk that a channel is preempted by another terminal device is reduced, thereby improving data transmission performance.

In a possible design, the terminal device obtains a data set and/or a reference set corresponding to the data set, where the data set includes the N pieces of data.

In a possible design, the determining an available resource set $S_A$ based on N parameter sets includes: determining, based on the N parameter sets, a first parameter set corresponding to the data set, where the first parameter set includes at least one of the following: a first sending priority $prio_{TX}$, a first data delay budget $PDB$, a first frequency domain resource unit $L_{subCH}$, or a first channel access priority class $CAPC$, $prio_{TX} = max(prio_{TX,i})$, $PDB = min(PDB_i)$, $L_{subCH} = max(L_{subCH,i})$, $CAPC = max(CAPC_i)$, max() indicates taking a maximum value in N values, and min() indicates taking a minimum value in N values; and determining $S_A$ based on the first parameter set.

In a possible design, the determining $S_A$ based on the first parameter set includes:

step a: determining an initial available resource set $S_A^{Initial}$ based on the first parameter set; and

step b: excluding a first resource from $S_A^{Initial}$ based on the first parameter set, where the first resource is a time unit that is in the resource selection window and that corresponds to a time unit that is not sensed in a sensing window; and/or

step c: excluding a second resource from $S_A^{Initial}$ based on received first sidelink control information SCI, where the second resource is a reserved resource in the first SCI, a reference signal received power RSRP of the first SCI is greater than an RSRP threshold $Th_{RSRP}$, and the reserved resource in the first SCI is located in a time unit in the resource selection window; and determining $S_A$ based on at least one of the first resource and the second resource.

In embodiments of this application, the first SCI may be first-stage SCI, second-stage SCI, or first-stage SCI and second-stage SCI. This is not limited in this application.

In a possible design, the method further includes: after performing step b, if a ratio of a set of remaining resources to $S_A^{Initial}$ is less than a first threshold, performing step a again.

In a possible design, the method further includes: after performing step c, if a ratio of a set of remaining resources to $S_A^{Initial}$ is less than the first threshold, increasing $Th_{RSRP}$ by a first step size, and performing step c again based on increased $Th_{RSRP}$, until a ratio of a set of remaining resources to $S_A^{Initial}$ is greater than or equal to the first threshold.

In a possible design, further, the determining $S_A$ based on at least one of the first resource and the second resource includes: determining that $S_A = S_A^{Initial} - first\ resource - second\ resource.$

In a possible design, the method further includes: determining $Th_{RSRP}$, where $Th_{RSRP}$ is determined based on $prio_{Tx}$ and a priority $prio_{Rx}$ indicated in the first SCI.

In the foregoing implementation of determining $S_A$, the N pieces of data are used as a whole, the initial available resource set is determined by using a same parameter, and the first resource and/or the second resource are/is excluded by using a same parameter. In this way, a same available resource set can be determined for the plurality of pieces of data, and continuous slot resources are selected for the plurality of pieces of data in the set, so that data can be sent on continuous resources in $S_A$, a risk that a resource is preempted by another terminal device is reduced, and a probability of continuously sending data is improved. In addition, the data transmission performance is finally improved.

Optionally, $L_{subCH} = 1$, $prio_{TX} = max(prio_{TX,i})$, $PDB = min(PDB_i)$, and $CAPC = max(CAPC_i)$. In a possible design, the determining $S_A$ based on the first parameter set includes:

step d: determining $S_A^{Initial}$ based on the first parameter set; and

step e: excluding a third resource from $S_A^{Initial}$ based on the first parameter set, where the third resource is a time unit that is in the resource selection window and that is of a periodic resource corresponding to a time unit that is not sensed in a sensing window; and/or

step f: separately excluding, from $S_A^{Initial}$ based on second SCI, a fourth resource corresponding to each parameter set, where a fourth resource i corresponding to the parameter set i is a reserved resource in the second SCI, an RSRP of the second SCI is greater than $Th_{RSRP,i}$ corresponding to the parameter set i, and the reserved resource in the second SCI is located in a time unit in the resource selection window; and determining $S_A$ based on at least one of a third resource corresponding to each parameter set and the fourth resource.

In a possible design, the method further includes: after performing step e, if a ratio of a set of remaining resources to $S_A^{Initial}$ is less than a second threshold i corresponding to **any** parameter set i, performing step d again.

In a possible design, the method further includes: after performing step f, if a ratio of a set of remaining resources corresponding to any parameter set i to $S_A^{Initial}$ is less than a second threshold i corresponding to the any parameter set i, increasing $Th_{RSRP,i}$ by a first step size, and performing step f again based on increased $Th_{RSRP,i}$, until ratios of sets of remaining resources corresponding to all parameter sets to $S_A^{Initial}$ are greater than or equal to corresponding second thresholds i.

In a possible design, that $S_A = S_A^{initial} - U_{i=0}^{N-1}\left(S_A^{initial} - S_{A,i}\right)$ is determined, where $S_{A,i}$ is a set of remaining resources corresponding to the parameter set i, and U indicates taking a union set.

In a possible design, the method further includes: determining $Th_{RSRP,i}$, where $Th_{RSRP,i}$ is determined based on $prio_{Tx,i}$ and a priority $prio_{Rx}$ indicated in first SCI.

In the foregoing implementation of determining $S_A$, parameters related to determining the sensing window and the selection window are combined, and other parameters are not combined or one or more of other parameters are combined. A same initial available resource set may be used to reduce complexity. In addition, a parameter that is not combined may be flexibly selected as required, to improve accuracy of resource exclusion.

In a possible design, the determining an available resource set $S_A$ based on N parameter sets includes: determining N initial available resource sets $S_{A,i}^{initial}$ and N available resource sets $S_{A,i}$ based on the N parameter sets respectively; and determining that $S_A = \bigcap_{i=0}^{N-1} S_{A,i}^{initial} - U_{i=0}^{N-1}\left(S_{A,i}^{initial} - S_{A,i}\right)$, where $\cap$ indicates taking an intersection set, and U indicates taking a union set.

In a possible design, the determining an available resource set $S_A$ based on N parameter sets includes: determining N available resource sets $S_{A,i}$ based on the N parameter sets respectively; and determining $S_A$ based on $S_{A,i}$, where $S_A = \cap S_{A,i}$, and $\cap$ indicates taking an intersection set.

In the foregoing implementation of determining $S_A$, an available resource set i corresponding to each piece of data i is first obtained, and then each available resource set i is processed to obtain the available resource set $S_A$ corresponding to the N pieces of data. A conventional technology is reused as much as possible, to reduce complexity.

In a possible design, the sending N pieces of data on a resource in $S_A$ includes: sending the N pieces of data on continuous resources in $S_A$.

In a possible design, K pieces of data are sent on a resource in $S_A$, where K is a positive integer less than or equal to N. Specifically, the K pieces of data are sent on continuous resources in $S_A$.

According to a second aspect, this application provides a communication method. The method may include: A second terminal device receives fourth SCI from a first terminal device, where the fourth SCI carries information about a reserved resource, and information about a data priority and/or information about a CAPC. The second terminal device determines, based on the fourth SCI of the first terminal device that is sensed, that the data priority and/or the CAPC of the first terminal device meet/meets a COT sharing condition. The second terminal device determines an available resource set $S_A$. The second terminal device sends COT sharing indication information to the first terminal device, to indicate a resource that is able to be shared. The second terminal device sends N pieces of data on at least one resource in $S_A$. Optionally, the COT sharing condition is that a priority and/or a CAPC that is of reserved data and that is in the fourth SCI of the first terminal device is higher than a data priority of at least one of the N pieces of data and/or a CAPC. Alternatively, for the COT sharing condition, refer to an implementation of the second terminal device. The COT sharing condition is not limited in this application.

In a possible design, the determining $S_A$ includes determining one $S_{A,i}$ for each piece of data i of the N pieces of data. In other words, N available resource sets are determined, and each available resource set corresponds to one of the N pieces of data.

In a possible design, the second terminal device determines a resource (set) $S_{A,i}^{shared}$ that is reserved by the first terminal device in $S_{A,i}$ of each piece of data i of the N pieces of data and that is able to be shared.

In a possible design, the second terminal device reports, to a MAC layer, $S_{A,i}$ of each piece of data i of the N pieces of data and corresponding $S_{A,i}^{shared}$.

In a possible design, the second terminal device obtains M pieces of data, where M is greater than or equal to N.

In a possible design, the determining $S_A$ includes determining one $S_{A,i}$ for each piece of data i of the M pieces of data.

In a possible design, the second terminal device determines a resource (set) $S_{A,i}^{shared}$ that is reserved by the first terminal device in $S_{A,i}$ of each piece of data i of the M pieces of data and that is able to be shared.

In a possible design, the second terminal device reports, to the MAC layer, $S_{A,i}$ of each piece of data i of the M pieces of data and corresponding $S_{A,i}^{shared}$.

In a possible design, the first terminal device includes a plurality of terminal devices.

In a possible design, it is determined that $S_A$ includes a resource (set) $S_{A,i,k}^{shared}$ that is reserved by a terminal device k in the first terminal device in $S_{A,i}$ of each piece of data i of the M pieces of data and that is able to be shared. $S_{A,i,k}^{shared}$ is a resource (set) that is reserved by the terminal device k corresponding to $S_{A,i}$ of each piece of data i, and that meets the COT sharing condition. Optionally, the COT sharing condition is that the priority and/or the CAPC that is of the reserved data and that is in the fourth SCI of the first terminal device is higher than a data priority of the data i and/or a CAPC, where k is an integer greater than or equal to 0. Alternatively, for the COT sharing condition, refer to an implementation of the second terminal device. The COT sharing condition is not limited in this application.

In a possible design, the second terminal device reports, to the MAC layer, $S_{A,i}$ of each piece of data i of the M pieces of data and corresponding $S_{A,i,k}^{shared}$.

In a possible design, the reporting $S_{A,i,k}^{shared}$ to the MAC layer includes: reporting information about a time-frequency resource reserved by the terminal device k corresponding to the data i, and reporting a priority, a CAPC, a source identifier (source ID), a destination identifier (destination ID), and HARQ feedback-related information that are of data reserved by the terminal device k corresponding to $S_{A,i,k}^{shared}$.

In a possible design, mode 2 continuous transmission and COT sharing are supported and configured by using signaling. In a possible design, the determining $S_A$ includes determining one $S_A$ for the N pieces of data.

In a possible design, the determining $S_A$ includes determining one $S_A$ for the M pieces of data.

In a possible design, the second terminal device determines the available resource set $S_A$, and reports, to the MAC layer, a resource $S_A^{shared}$ that is reserved by the first terminal device and that is able to be shared.

In a possible design, the first terminal device includes a plurality of terminal devices.

In a possible design, it is determined that $S_A$ includes a resource (set) $S_{A,k}^{shared}$ that is reserved by a terminal device k in the first terminal device in $S_A$ and that is able to be shared. $S_{A,k}^{shared}$ is a resource (set) that is reserved by the terminal device k corresponding to $S_A$, and that meets the COT sharing condition. Optionally, the COT sharing condition is that the priority and/or the CAPC that is of the reserved data and that is in the fourth SCI of the first terminal device is higher than a data priority of the data i and/or a CAPC, where k is an integer greater than or equal to 0. Alternatively, for the COT sharing condition, refer to an implementation of the second terminal device. The COT sharing condition is not limited in this application.

In a possible design, the second terminal device reports, to the MAC layer, $S_A$ and corresponding $S_{A,k}^{shared}$.

In a possible design, the reporting $S_{A,k}^{shared}$ to the MAC layer includes: reporting information about a time-frequency resource reserved by the terminal device k corresponding to $S_A$, and reporting a priority, a CAPC, a source identifier (source ID), a destination identifier (destination ID), and HARQ feedback-related information that are of data reserved by the terminal device k corresponding to $S_{A,k}^{shared}$.

In a possible design, the HARQ feedback-related information includes one or more of the following: a HARQ process number (process number), a new data indicator (New data indicator), a redundancy version (Redundancy version), a HARQ feedback enabled/disabled indicator feedback enabled/disabled indicator, a unicast/multicast broadcast type indicator (Cast type indicator), a channel state information request (CSI request), a zone identifier (Zone ID), and a communication range requirement (Communication range requirement).

In a possible design, that the second terminal device sends N pieces of data on at least one resource in $S_A$ includes: The second terminal device sends the data i on at least one resource in $S_{A,i}$.

In a possible design, that the second terminal device sends N pieces of data on at least one resource in $S_A$ includes: The second terminal device sends the N pieces of data on the at least one resource in $S_A$.

In a possible design, the MAC layer selects a resource, and selects the at least one resource to send the data i. Specifically, how the MAC layer selects the at least one resource is up to a MAC layer implementation. In a possible manner, in one piece of COT, a new transmission (initial transmission) resource of the N pieces of data is first selected to perform transmission of the N pieces of data, and then a retransmission resource is selected to perform transmission of one or more of the N pieces of data. Alternatively, all resources in one piece of COT are new transmission resources, and are used to perform transmission of the N pieces of data. Alternatively, all resources in one piece of COT are retransmission resources. This is not limited in this application. It may be understood that, when all resources in one piece of COT are retransmission resources, the COT is used to perform transmission of data that has been transmitted for one or more times in one or more pieces of COT before the COT and that is in the N pieces of data.

In a possible design, that the MAC layer of the second terminal device performs COT sharing based on $S_{A,i}$ reported by a PHY layer, and $S_{A,i,k}^{shared}$ and corresponding information that are reported by the PHY layer specifically includes: The MAC layer shares, in COT, a resource that is in $S_{A,i,k}^{shared}$ and that is reserved for data that has a higher data priority than the data i. The shared resource needs to meet a CAPC that is reported from the PHY layer and whose value is less than or equal to that of data i with a minimum CAPC value in the COT.

In a possible design, that the MAC layer of the second terminal device performs COT sharing based on $S_{A,i}$ reported by a PHY layer, and $S_{A,i,k}^{shared}$ and corresponding information that are reported by the PHY layer includes: when $S_{A,i,k}^{shared}$ and $S_{A,i,j}^{shared}$ meet a sharing condition and time-frequency resources overlap, if data priorities of data of the first terminal device are different, the MAC layer may share, in COT, a resource reserved for data with a high data priority; or if data priorities of data of the first terminal device are the same, the MAC layer randomly selects, in COT for sharing, a resource reserved for data, where j is a terminal device j in the first terminal device, and j is an integer greater than or equal to 0.

In a possible design, that the MAC layer of the second terminal device performs resource preemption based on $S_{A,i}$ reported by the PHY layer, and $S_{A,i,k}^{shared}$ and corresponding information that are reported by the PHY layer includes: The MAC layer preempts, by using data of a high data priority of the second terminal device, a resource that is reserved for data of a low data priority of the first terminal device and that is in the resource (set) $S_{A,i,k}^{shared}$ that is able to be shared. In this case, it may be understood that the second terminal device finally does not share a part of or all resources in $S_{A,i,k}^{shared}$.

Further, after selecting the resource, the second terminal device notifies another terminal device of reservation information (for example, the data i) of the resource by using SCI; and notifies another terminal device of information about the shared resource (for example, a resource shared with the first terminal device), including a source identifier (source ID), a destination identifier (destination ID), and a time-frequency resource position.

In a possible design, that the MAC layer of the second terminal device performs COT sharing based on $S_A$ reported by a PHY layer, and $S_{A,k}^{shared}$ and corresponding information that are reported by the PHY layer specifically includes: The MAC layer shares, in COT, a resource that is in $S_{A,k}^{shared}$ and that is reserved for data that has a higher data priority than the data i. The shared resource needs to meet a CAPC that is reported from the PHY layer and whose value is less than or equal to that of data i with a minimum CAPC value in the COT.

In a possible design, that the MAC layer of the second terminal device performs COT sharing based on $S_A$ reported by a PHY layer, and $S_{A,k}^{shared}$ and corresponding information that are reported by the PHY layer includes: when $S_{A,k}^{shared}$ and $S_{A,j}^{shared}$ meet a sharing condition and time-frequency resources overlap, if data priorities of data in a plurality of terminal devices for reserving a resource are different, the MAC layer may share, in COT, a resource reserved for data with a high data priority; or if data priorities of data in a plurality of terminal devices for reserving a resource are the same, the MAC layer randomly selects, in COT for sharing, a resource reserved for data, where j is a terminal device j in the first terminal device, and j is an integer greater than or equal to 0.

In a possible design, that the MAC layer of the second terminal device performs resource preemption based on $S_A$ reported by the PHY layer, and $S_{A,k}^{shared}$ and corresponding information that are reported by the PHY layer includes: The MAC layer preempts, by using data of a high data priority, a resource that is reserved for data of a low data priority and that is in the resource (set) $S_{A,k}^{shared}$ that is able to be shared. In this case, it may be understood that the second terminal device finally does not share a part of or all resources in $S_{A,k}^{shared}$.

Further, after selecting the resource, the second terminal device notifies another terminal device of reservation information (for example, the data i) of the resource by using SCI; and notifies another terminal device of information about the shared resource (for example, a resource shared with the first terminal device), including a source identifier (source ID), a destination identifier (destination ID), and a time-frequency resource position.

Optionally, in embodiments of this application, the COT sharing indication information may be carried in first-stage SCI, second-stage SCI, or a MAC CE, or may be carried in a combination of at least two pieces of information. This is not limited in this application.

In embodiments of this application, the fourth SCI may be first-stage SCI, second-stage SCI, or first-stage SCI and second-stage SCI. This is not limited in this application. The at least one resource for sending the N pieces of data and the resource shared with the first terminal device may be continuous resources in time domain, that is, continuous slots.

According to the method, a same available resource set may be determined for a plurality of pieces of data (including data of a terminal device and data sent in shared COT), and continuous slot resources are further selected for the plurality of pieces of data in the set, so that data can be sent on continuous resources in $S_A$, a risk that a resource is preempted by another terminal device is reduced, and a probability of continuously sending data is improved. In addition, data transmission performance is finally improved.

According to a third aspect, this application provides a communication apparatus, and includes a processor and a transceiver. The processor is configured to determine an available resource set $S_A$ based on N parameter sets, where $S_A$ is located in a resource selection window. The transceiver is configured to send N pieces of data on a resource in $S_A$, where the N parameter sets correspond to the N pieces of data, data i corresponds to a parameter set i, N is a positive integer greater than 1, i is an integer greater than or equal to 0 and less than N, and the parameter set i includes at least one of the following parameters: a sending priority $prio_{TX,i}$, a data delay budget $PDB_i$, a frequency domain resource unit $L_{subCH,i}$, or a channel access priority class $CAPC_i$.

In a possible design, the processor is configured to obtain a data set, where the data set includes the N pieces of data.

In a possible design, the determining an available resource set $S_A$ based on N parameter sets includes: determining, based on the N parameter sets, a first parameter set corresponding to the data set, where the first parameter set includes at least one of the following: a first sending priority $prio_{TX}$, a first data delay budget $PDB$, a first frequency domain resource unit $L_{subCH}$, or a first channel access priority class $CAPC$, $prio_{TX} = max(prio_{TX,i})$, $PDB = min(PDB_i)$, $L_{subCH} = max(L_{subCH,i})$, $CAPC = max(CAPC_i)$, max() indicates taking a maximum value in N values, and min() indicates taking a minimum value in N values; and determining $S_A$ based on the first parameter set.

Optionally, $L_{subCH} = 1$, $prio_{TX} = max(prio_{TX,i})$, $PDB = min(PDB_i)$, and $CAPC = max(CAPC_i)$. In a possible design, the determining $S_A$ based on the first parameter set includes:

step a: determining an initial available resource set $S_A^{Initial}$ based on the first parameter set; and

step b: excluding a first resource from $S_A^{Initial}$ based on the first parameter set, where the first resource is a time unit that is in the resource selection window and that corresponds to a time unit that is not sensed in a sensing window; and/or

step c: excluding a second resource from $S_A^{Initial}$ based on received first sidelink control information SCI, where the second resource is a reserved resource in the first SCI, a reference signal received power RSRP of the first SCI is greater than an RSRP threshold $Th_{RSRP}$, and the reserved resource in the first SCI is located in a time unit in the resource selection window; and determining $S_A$ based on at least one of the first resource and the second resource.

In a possible design, the processor is further configured to: after performing step b, if a ratio of a set of remaining resources to $S_A^{Initial}$ is less than a first threshold, perform step a again.

In a possible design, the processor is further configured to: after performing step c, if a ratio of a set of remaining resources to $S_A^{Initial}$ is less than the first threshold, increase $Th_{RSRP}$ by a first step size, and perform step c again based on increased $Th_{RSRP}$, until a ratio of a set of remaining resources to $S_A^{Initial}$ is greater than or equal to the first threshold.

In a possible design, further, the determining $S_A$ based on at least one of the first resource and the second resource includes: determining that $S_A = S_A^{Initial} - first\ resource - second\ resource$.

In a possible design, the processor is further configured to determine $Th_{RSRP}$, where $Th_{RSRP}$ is determined based on $prio_{TX}$ and a priority $prio_{Rx}$ indicated in the first SCI.

In the foregoing implementation of determining $S_A$, the N pieces of data are used as a whole, the initial available resource set is determined by using a same parameter, and the first resource and/or the second resource are/is excluded by using a same parameter. In this way, a same available resource set can be determined for a plurality of pieces of data, and continuous slot resources are selected for the plurality of pieces of data in the set, so that data can be sent on continuous resources in $S_A$, a risk that a resource is preempted by another terminal device is reduced, and a probability of continuously sending data is improved. In addition, data transmission performance is finally improved.

In a possible design, the determining $S_A$ based on the first parameter set includes:

step d: determining $S_A^{Initial}$ based on the first parameter set; and

step e: excluding a third resource from $S_A^{Initial}$ based on the first parameter set, where the third resource is a time unit that is in the resource selection window and that is of a periodic resource corresponding to a time unit that is not sensed in a sensing window; and/or

step f: separately excluding, from $S_A^{Initial}$ based on second SCI, a fourth resource corresponding to each parameter set, where a fourth resource i corresponding to the parameter set i is a reserved resource in the second SCI, an RSRP of the second SCI is greater than $Th_{RSRP,i}$ corresponding to the parameter set i, and the reserved resource in the second SCI is located in a time unit in the resource selection window; and

determining $S_A$ based on at least one of a third resource corresponding to each parameter set and the fourth resource.

In a possible design, the processor is further configured to: after performing step e, if a ratio of a set of remaining resources to $S_A^{Initial}$ is less than a second threshold i corresponding to **any** parameter set i, perform step d again.

In a possible design, the processor is further configured to: after performing step f, if a ratio of a set of remaining resources corresponding to any parameter set i to $S_A^{Initial}$ is less than a second threshold i corresponding to the any parameter set i, increase $Th_{RSRP,i}$ by a first step size, and perform step f again based on increased $Th_{RSRP,i}$, until ratios of sets of remaining resources corresponding to all parameter sets to $S_A^{Initial}$ are greater than or equal to corresponding second thresholds i.

In a possible design, that $S_A = S_A^{initial} - U_{i=0}^{N-1}\left(S_A^{initial} - S_{A,i}\right)$ is determined, where $S_{A,i}$ is a set of remaining resources corresponding to the parameter set i, and U indicates taking a union set.

In a possible design, the processor is further configured to determine $Th_{RSRP,i}$, where $Th_{RSRP,i}$ is determined based on $prio_{Tx,i}$ and a priority $prio_{Rx}$ indicated in first SCI.

In the foregoing implementation of determining $S_A$, parameters related to determining the sensing window and the selection window are combined, and other parameters are not combined or one or more of other parameters are combined. A same initial available resource set may be used to reduce complexity. In addition, a parameter that is not combined may be flexibly selected as required, to improve accuracy of resource exclusion.

In a possible design, the determining an available resource set $S_A$ based on N parameter sets includes: determining N initial available resource sets $S_{A,i}^{initial}$ and N available resource sets $S_{A,i}$ based on the N parameter sets respectively; and determining that $S_A = \bigcap_{i=0}^{N-1} S_{A,i}^{initial} - U_{i=0}^{N-1}\left(S_{A,i}^{initial} - S_{A,i}\right)$, where $\cap$ indicates taking an intersection set, and U indicates taking a union set.

In a possible design, the determining an available resource set $S_A$ based on N parameter sets includes: determining N available resource sets $S_{A,i}$ based on the N parameter sets respectively; and determining $S_A$ based on $S_{A,i}$, where $S_A = \cap S_{A,i}$ and $\cap$ indicates taking an intersection set.

In the foregoing implementation of determining $S_A$, an available resource set i corresponding to each piece of data i is first obtained, and then each available resource set i is processed to obtain the available resource set $S_A$ corresponding to the N pieces of data. A conventional technology is reused as much as possible, to reduce complexity.

In a possible design, the sending N pieces of data on a resource in $S_A$ includes: sending the N pieces of data on continuous resources in $S_A$.

According to a fourth aspect, this application provides a communication apparatus. The communication apparatus includes a processor and a transceiver. The transceiver is configured to receive fourth SCI from a first terminal device, where the fourth SCI carries information about a reserved resource, and information about a data priority and/or information about a CAPC. The processor is configured to determine, based on the fourth SCI of the first terminal device that is sensed, that the data priority and/or the CAPC of the first terminal device meets a COT sharing condition. The processor is configured to determine an available resource set $S_A$. The transceiver is configured to send COT sharing indication information to the first terminal device, to indicate a resource that is able to be shared. The transceiver is configured to send N pieces of data on at least one resource in $S_A$. Optionally, the COT sharing condition is that a priority and/or a CAPC that is of reserved data and that is in the fourth SCI of the first terminal device is higher than a data priority of at least one of the N pieces of data and/or a CAPC. Alternatively, for the COT sharing condition, refer to an implementation of a second terminal device. The COT sharing condition is not limited in this application.

In a possible design, the determining $S_A$ includes determining one $S_{A,i}$ for each piece of data i of the N pieces of data. In other words, N available resource sets are determined, and each available resource set corresponds to one of the N pieces of data.

In a possible design, the communication apparatus determines a resource (set) $S_{A,i}^{shared}$ that is reserved by the first terminal device in $S_{A,i}$ of each piece of data i of the N pieces of data and that is able to be shared.

In a possible design, the communication apparatus reports, to a MAC layer, $S_{A,i}$ of each piece of data i of the N pieces of data and corresponding $S_{A,i}^{shared}$.

In a possible design, the communication apparatus obtains M pieces of data, where M is greater than or equal to N.

In a possible design, the determining $S_A$ includes determining one $S_{A,i}$ for each piece of data i of the M pieces of data.

In a possible design, the second terminal device determines a resource (set) $S_{A,i}^{shared}$ that is reserved by the first terminal device in $S_{A,i}$ of each piece of data i of the M pieces of data and that is able to be shared.

In a possible design, the communication apparatus reports, to the MAC layer, $S_{A,i}$ of each piece of data i of the M pieces of data and corresponding $S_{A,i}^{shared}$.

In a possible design, the first terminal device includes a plurality of terminal devices.

In a possible design, it is determined that $S_A$ includes a resource (set) $S_{A,i,k}^{shared}$ that is reserved by a terminal device k in the first terminal device in $S_{A,i}$ of each piece of data i of the M pieces of data and that is able to be shared. $S_{A,i,k}^{shared}$ is a resource (set) that is reserved by the terminal device k corresponding to $S_{A,i}$ of each piece of data, and that meets the COT sharing condition. Optionally, the COT sharing condition is that the priority and/or the CAPC that is of the reserved data and that is in the fourth SCI of the first terminal device is higher than a data priority of the data i and/or a CAPC, where k is an integer greater than or equal to 0. Alternatively, for the COT sharing condition, refer to an implementation of the communication apparatus. The COT sharing condition is not limited in this application.

In a possible design, the communication apparatus reports, to a MAC layer, $S_{A,i}$ of each piece of data i of the M pieces of data and corresponding $S_{A,i,k}^{shared}$.

In a possible design, the reporting $S_{A,i,k}^{shared}$ to a MAC layer includes: reporting information about a time-frequency resource reserved by the terminal device k corresponding to the data i, and reporting a priority, a CAPC, a source identifier (source ID), a destination identifier (destination ID), and HARQ feedback-related information that are of data reserved by the terminal device k corresponding to $S_{A,i,k}^{shared}$.

In a possible design, mode 2 continuous transmission and COT sharing are supported and configured by using signaling.

In a possible design, the determining $S_A$ includes determining one $S_A$ for the N pieces of data.

In a possible design, the determining $S_A$ includes determining one $S_A$ for the M pieces of data.

In a possible design, the communication apparatus determines the available resource set $S_A$, and reports, to the MAC layer, a resource $S_A^{shared}$ that is reserved by the first terminal device and that is able to be shared.

In a possible design, the first terminal device includes a plurality of terminal devices.

In a possible design, it is determined that $S_A$ includes a resource (set) $S_{A,k}^{shared}$ that is reserved by a terminal device k in the first terminal device in $S_A$ and that is able to be shared. $S_{A,k}^{shared}$ is a resource (set) that is reserved by the terminal device k corresponding to $S_A$, and that meets the COT sharing condition. Optionally, the COT sharing condition is that the priority and/or the CAPC that is of the reserved data and that is in the fourth SCI of the first terminal device is higher than a data priority of the data i and/or a CAPC, where k is an integer greater than or equal to 0. Alternatively, for the COT sharing condition, refer to an implementation of the second terminal device. The COT sharing condition is not limited in this application.

In a possible design, the communication apparatus reports, to the MAC layer, $S_A$ and corresponding $S_{A,k}^{shared}$ .

In a possible design, the reporting $S_{A,k}^{shared}$ to the MAC layer includes: reporting information about a time-frequency resource reserved by the terminal device k corresponding to $S_A$, and reporting a priority, a CAPC, a source identifier (source ID), a destination identifier (destination ID), and HARQ feedback-related information that are of data reserved by the terminal device k corresponding to $S_{A,k}^{shared}$ .

In a possible design, the HARQ feedback-related information includes one or more of the following: a HARQ process number (process number), a new data indicator (New data indicator), a redundancy version (Redundancy version), a HARQ feedback enabled/disabled indicator feedback enabled/disabled indicator, a unicast/multicast broadcast type indicator (Cast type indicator), a channel state information request (CSI request), a zone identifier (Zone ID), and a communication range requirement (Communication range requirement).

In a possible design, that the communication apparatus sends N pieces of data on at least one resource in $S_A$ includes: The communication apparatus sends the data i on at least one resource in $S_{A,i}$.

In a possible design, that the communication apparatus sends N pieces of data on at least one resource in $S_A$ includes: The communication apparatus sends the N pieces of data on the at least one resource in $S_A$.

The at least one resource for sending the N pieces of data and the resource shared with the first terminal device may be continuous resources in time domain, that is, continuous slots.

In a possible design, the MAC layer selects a resource, and selects the at least one resource to send the data i. Specifically, how the MAC layer selects the at least one resource is up to a MAC layer implementation. In a possible manner, in one piece of COT, a new transmission (initial transmission) resource of the N pieces of data is first selected to perform transmission of the N pieces of data, and then a retransmission resource is selected to perform transmission of one or more of the N pieces of data. Alternatively, all resources in one piece of COT are new transmission resources, and are used to perform transmission of the N pieces of data. Alternatively, all resources in one piece of COT are retransmission resources. This is not limited in this application. It may be understood that, when all resources in one piece of COT are retransmission resources, the COT is used to perform transmission of data that has been transmitted for one or more times in one or more pieces of COT before the COT and that is in the N pieces of data.

In a possible design, that the MAC layer of the communication apparatus performs COT sharing based on $S_{A,i}$, $S_{A,i,k}^{shared}$ , and corresponding information that are reported by a PHY layer specifically includes: The MAC layer shares, in COT, a resource that is in $S_{A,i,k}^{shared}$ and that is reserved for data that has a higher data priority than the data i. The shared resource needs to meet a CAPC that is reported from the PHY layer and whose value is less than or equal to that of data i with a minimum CAPC value in the COT.

In a possible design, that the MAC layer of the communication apparatus performs COT sharing based on $S_{A,i}$, $S_{A,i,k}^{shared}$ , and corresponding information that are reported by a PHY layer includes: when $S_{A,i,k}^{shared}$ and $S_{A,i,j}^{shared}$ meet a sharing condition and time-frequency resources overlap, if data priorities of data of the first terminal device are different, the MAC layer may share, in COT, a resource reserved for data with a high data priority; or if data priorities of data of the first terminal device are the same, the MAC layer randomly selects, in COT for sharing, a resource reserved for data, where j is a terminal device j in the first terminal device, and j is an integer greater than or equal to 0.

In a possible design, that the MAC layer of the communication apparatus performs resource preemption based on $S_{A,i}$ reported by the PHY layer, and $S_{A,i,k}^{shared}$ and corresponding information that are reported by the PHY layer includes: The MAC layer preempts, by using data of a high data priority of the second terminal device, a resource that is reserved for data of a low data priority of the first terminal device and that is in the resource (set) $S_{A,i,k}^{shared}$ that is able to be shared. In this case, it may be understood that the second terminal device finally does not share a part of or all resources in $S_{A,i,k}^{shared}$ .

Further, after selecting the resource, the communication apparatus notifies another terminal device of reservation information (for example, the data i) of the resource by using SCI; and notifies another terminal device of information about the shared resource (for example, a resource shared with the first terminal device), including a source identifier (source ID), a destination identifier (destination ID), and a time-frequency resource position.

In a possible design, that the MAC layer of the communication apparatus performs COT sharing based on $S_A$, $S_{A,k}^{shared}$ , and corresponding information that are reported by a PHY layer specifically includes: The MAC layer shares, in COT, a resource that is in $S_{A,k}^{shared}$ and that is reserved for data that has a higher data priority than the data i. The shared resource needs to meet a CAPC that is reported from the PHY layer and whose value is less than or equal to that of data i with a minimum CAPC value in the COT.

In a possible design, that the MAC layer of the communication apparatus performs COT sharing based on $S_A$r, $S_{A,k}^{shared}$, and corresponding information that are reported by a PHY layer includes: when $S_{A,k}^{shared}$ and $S_{A,j}^{shared}$ meet a sharing condition and time-frequency resources overlap, if data priorities of data in a plurality of terminal devices for reserving a resource are different, the MAC layer may share, in COT, a resource reserved for data with a high data priority; or if data priorities of data in a plurality of terminal devices for reserving a resource are the same, the MAC layer randomly selects, in COT for sharing, a resource reserved for data, where j is a terminal device j in the first terminal device, and j is an integer greater than or equal to 0.

In a possible design, that the MAC layer of the communication apparatus performs resource preemption based on $S_A$ reported by the PHY layer, and $S_{A,k}^{shared}$ and corresponding information that are reported by the PHY layer includes: The MAC layer preempts, by using data of a high data priority, a resource that is reserved for data of a low data priority and that is in the resource (set) $S_{A,k}^{shared}$ that is able to be shared. In this case, it may be understood that the communication apparatus finally does not share a part of or all resources in $S_{A,k}^{shared}$ .

Further, after selecting the resource, the communication apparatus notifies another terminal device of reservation information (for example, the data i) of the resource by using SCI; and notifies another terminal device of information about the shared resource (for example, a resource shared with the first terminal device), including a source identifier (source ID), a destination identifier (destination ID), and a time-frequency resource position.

According to a fifth aspect, this application provides a communication apparatus, configured to implement a function in the first aspect, or configured to implement a function of the second terminal device in the second aspect.

According to a sixth aspect, an embodiment of this application provides a communication apparatus, and the apparatus has a function of implementing the communication method according to any implementation in any one of the foregoing aspects. The function may be implemented by hardware, or may be implemented by hardware executing corresponding software. The hardware or the software includes one or more modules corresponding to the function.

According to a seventh aspect, an embodiment of this application provides a communication apparatus, including a processor and a memory. The memory is configured to store instructions, and when the processor executes the instructions stored in the memory, the communication apparatus performs the communication method according to any implementation in any one of the foregoing aspects.

According to an eighth aspect, an embodiment of this application provides a communication apparatus, including a processor. The processor is configured to: be couple to a memory, and after reading instructions in the memory, perform the communication method according to any implementation in any one of the foregoing aspects according to the instructions.

According to a ninth aspect, an embodiment of this application provides a computer-readable storage medium. The computer-readable storage medium stores instructions. When the instructions are run on a computer, the computer is enabled to perform the communication method according to any implementation in any one of the foregoing aspects.

According to a tenth aspect, an embodiment of this application provides a computer program product including instructions. When the computer program product runs on a computer, the computer can perform the communication method according to any implementation in any one of the foregoing aspects.

According to an eleventh aspect, an embodiment of this application provides a circuit system. The circuit system includes a processing circuit. The processing circuit is configured to perform the communication method according to any implementation in any one of the foregoing aspects.

According to a twelfth aspect, an embodiment of this application provides a chip or a chip system. The chip or the chip system includes a processor. The processor is coupled to a memory. The memory stores instructions. When the instructions stored in the memory are executed by the processor, the communication method according to any implementation in any one of the foregoing aspects is implemented.

According to a thirteenth aspect, an embodiment of this application provides a communication system. The communication system includes the first terminal device in any one of the foregoing aspects and the second terminal device in any one of the foregoing aspects.

For technical effects brought by any possible design of the second aspect to the thirteenth aspect, refer to technical effects brought by a possible design of the first aspect. Details are not described herein again.

## BRIEF DESCRIPTION OF DRAWINGS

FIG. 1 shows a system architecture to which an embodiment of this application is applicable;
FIG. 2 shows another system architecture to which an embodiment of this application is applicable;
FIG. 3 shows still another system architecture to which an embodiment of this application is applicable;
FIG. 4 is a block diagram of a communication apparatus to which an embodiment of this application is applicable;
FIG. 5 is a block diagram of another communication apparatus to which an embodiment of this application is applicable;
FIG. 6 is a diagram of a sensing window and a resource selection window according to an embodiment of this application;
FIG. 7 is a schematic flowchart of an information sending method according to an embodiment of this application;
FIG. 8 is a diagram of a method for determining an available resource set according to an embodiment of this application;
FIG. 9 is a diagram of another method for determining an available resource set according to an embodiment of this application;
FIG. 10 is a diagram of still another method for determining an available resource set according to an embodiment of this application;
FIG. 11 is a schematic flowchart of a COT sharing method according to an embodiment of this application;
FIG. 12a is a diagram of a result of a COT sharing method according to an embodiment of this application;
FIG. 12b is a diagram of another result of a COT sharing method according to an embodiment of this application;
FIG. 12c-1 and FIG. 12c-2 are a diagram of another result of a COT sharing method according to an embodiment of this application;

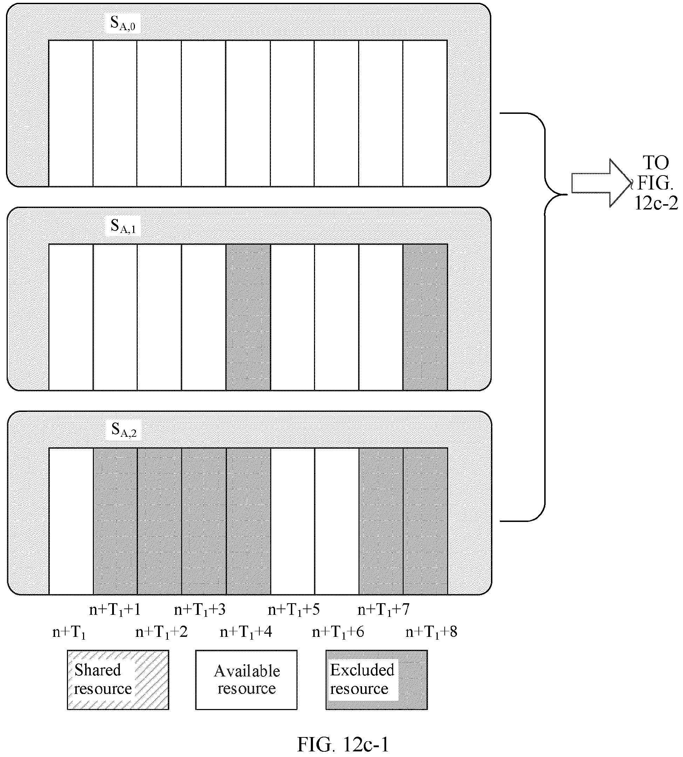

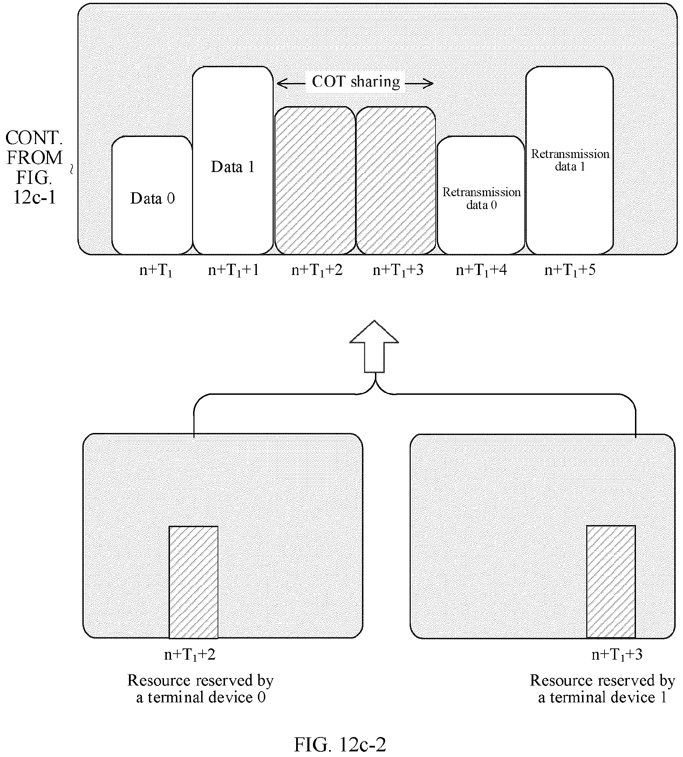

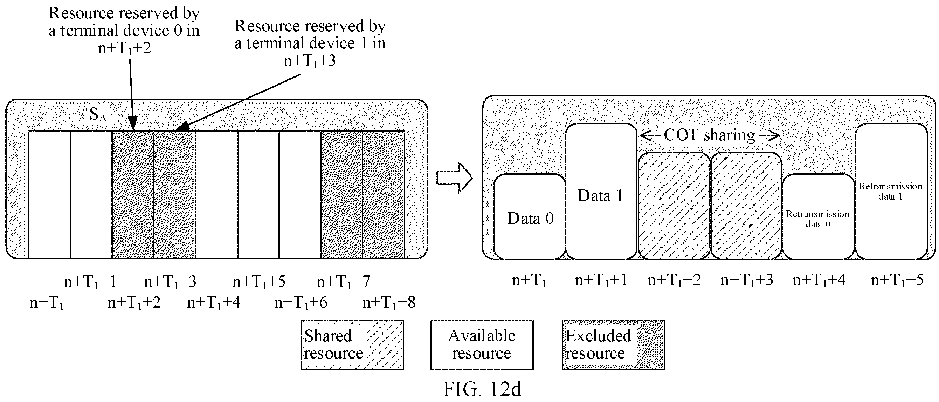

FIG. 12d is a diagram of another result of a COT sharing method according to an embodiment of this application;

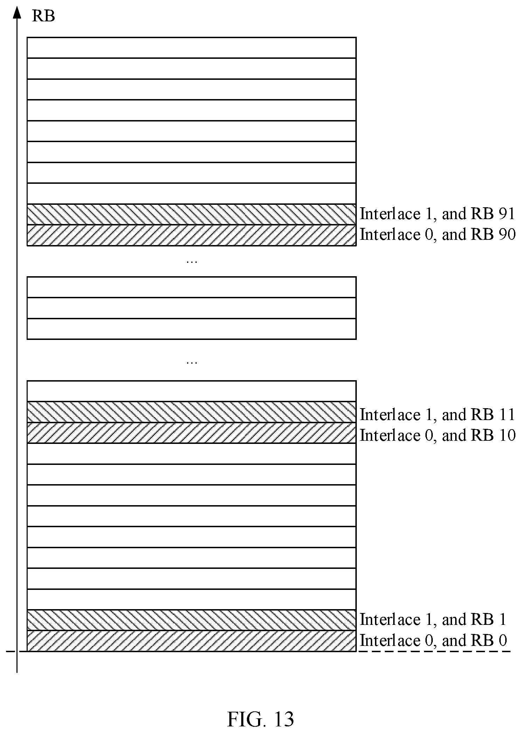

FIG. 13 is a diagram of interlaced RBs according to an embodiment of this application; and

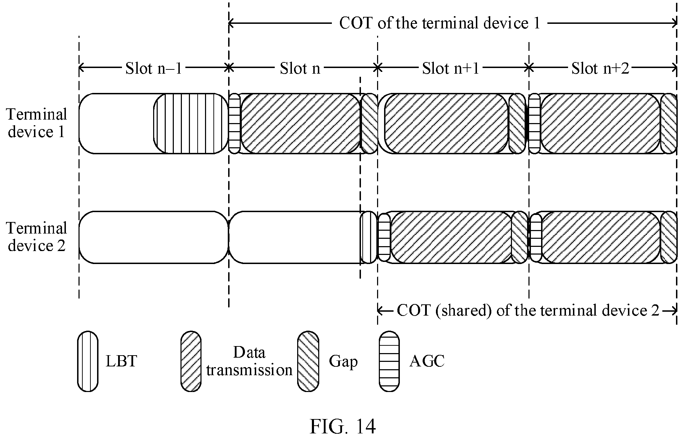

FIG. 14 is a diagram of a method for sending data in continuous slots according to an embodiment of this application.

## DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

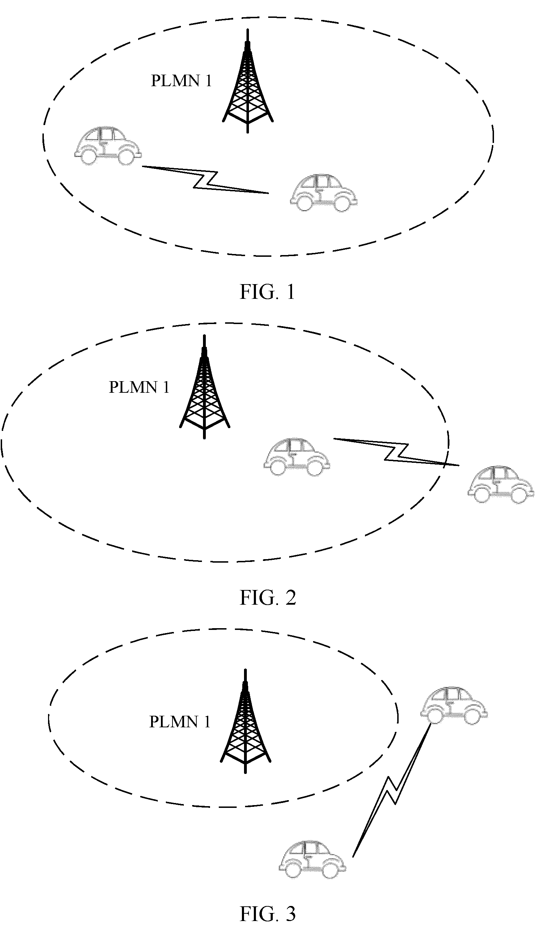

Embodiments of this application may be applied to a system for communication between terminal apparatuses, for example, a V2X communication system or a device-to-device (device-to-device, D2D) system. The following uses the V2X communication system as an example to describe a communication system to which embodiments of this application are applicable. Refer to FIG. 1, FIG. 2, and FIG. 3. The communication system includes at least two terminal apparatuses, and two terminal apparatuses can directly communicate with each other through a sidelink (sidelink, SL) (only two terminal apparatuses are shown in each of FIG. 1, FIG. 2, and FIG. 3). Optionally, the communication system further includes a network device. The terminal apparatus may further communicate with the network device.

The V2X communication system may have the following communication scenarios: vehicle-to-vehicle (vehicle-to-vehicle, V2V) communication, vehicle-to-infrastructure apparatus (vehicle-to-infrastructure, V2I) communication, vehicle-to-application server (vehicle-to-network, V2N) communication, vehicle-to-pedestrian's mobile terminal (vehicle-to-pedestrian, V2P) communication, and the like. In the V2X communication system, terminal apparatuses directly communicate with each other through a sidelink (sidelink, SL), without a receiving or sending process of a network device or an uplink or downlink communication link.

The terminal apparatus is mainly configured to receive or send data. Optionally, the terminal apparatus in embodiments of this application may be a device that implements a terminal function or a component in a device. For example, the terminal apparatus includes but is not limited to various handheld devices, vehicle-mounted devices, wearable devices, or computing devices that have a wireless communication function, or other processing devices connected to a wireless modem; or may include a subscriber unit (subscriber unit), a cellular phone (cellular phone), a smartphone (smartphone), a wireless data card, a personal digital assistant (personal digital assistant, PDA) computer, a tablet computer, a handheld (handheld) device, a laptop computer (laptop computer), a machine type communication (machine type communication, MTC) terminal (terminal), a user equipment (user equipment, UE), a mobile terminal, and the like. For another example, the terminal apparatus may be a component in any one of the foregoing devices (for example, the terminal apparatus may be a chip system in any one of the foregoing devices). In some embodiments of this application, the terminal apparatus may also be referred to as a terminal device or a terminal. This is uniformly described herein and is not described below again.

The network device in embodiments of this application is an apparatus that is deployed in a radio access network to provide a wireless communication function. Optionally, the network device may refer to a device that communicates with a wireless terminal on an air interface of an access network via one or more cells. An apparatus for implementing a function of the network device may be the network device, or may be an apparatus (for example, a chip in the network device) that supports the network device in implementing the function. Optionally, the network device may perform attribute management on the air interface. A base station device may also coordinate the attribute management on the air interface. The network device includes various forms of macro base stations or micro base stations (also referred to as small cells), such as a relay device of a relay station or a chip of a relay device, a transmission reception point (transmission reception point, TRP), an evolved NodeB (evolved NodeB, eNB), a next-generation network node (g NodeB, gNB), and an evolved NodeB connected to a next-generation core network (ng evolved NodeB, ng-eNB). Alternatively, in a distributed base station scenario, the network device may be a baseband unit (baseband unit, BBU) and a remote radio unit (remote radio unit, RRU). Alternatively, in a cloud radio access network (cloud radio access Network, CRAN) scenario, the network device may be a baseband unit pool (BBU pool) and an RRU.

Refer to FIG. 1, FIG. 2, and FIG. 3. For two terminal apparatuses that communicate with each other through a sidelink, the following three communication scenarios may exist: First, both the two terminal apparatuses fall within a coverage range of a same public land mobile network (public land mobile network, PLMN) (for example, a PLMN 1), as shown in FIG. 1. Second, only one terminal apparatus falls within a coverage range of a PLMN (for example, a PLMN 1), and the other terminal apparatus falls outside the coverage range of the PLMN (for example, the PLMN 1), as shown in FIG. 2. Third, both the two terminal apparatuses fall outside a coverage range of a PLMN (for example, a PLMN 1), and no preconfigured cell identity exists in an area in which the two terminal apparatuses are located, as shown in FIG. 3. Dashed-line elliptic areas in FIG. 1, FIG. 2, and FIG. 3 each indicates the coverage range of the PLMN 1. Because two terminal apparatuses communicate with each other through a sidelink, the two terminal apparatuses can normally communicate with each other regardless of whether both the two terminal apparatuses fall within the coverage range of the PLMN.

The communication systems shown in FIG. 1, FIG. 2, and FIG. 3 may be applied to a long term evolution (long term evolution, LTE) or long term evolution advanced (LTE Advanced, LTE-A) system, or may be applied to a 5G network or another network in the future. It is clear that the communication systems may be further applied to a system in which LTE and 5G are mixed for networking or another system. This is not specifically limited in embodiments of this application. In different networks, the network device or the terminal apparatus in the foregoing communication system may correspond to different names. A person skilled in the art may understand that the names do not constitute a limitation on the device.

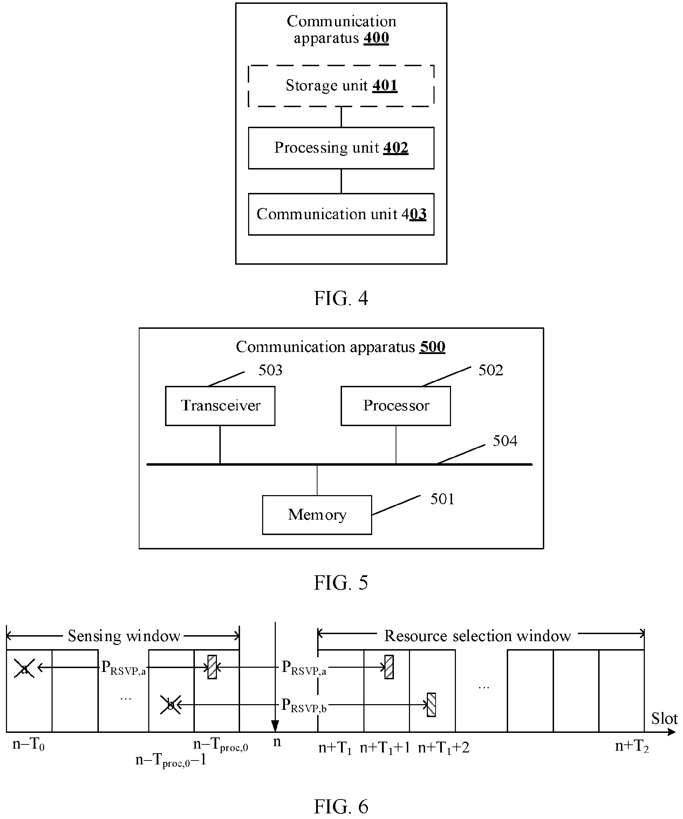

FIG. 4 is a block diagram of a communication apparatus according to an embodiment of this application. The communication apparatus 400 may exist in a form of software, or may be a device or a component (for example, a chip system) in a device. The communication apparatus 400 includes a processing unit 402 and a communication unit 403.

The processing unit 402 is mainly configured to: process a communication protocol and communication data, and control the communication apparatus to, for example, execute a software program, or process data of a software program.

The processing unit 402 may be a processor or a controller, for example, may be a CPU, a general-purpose processor, a digital signal processor (Digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logic blocks, modules, and circuits described with reference to content disclosed in this application. Alternatively, the processor may be a combination of processors implementing a computing function, for example, a combination of one or more microprocessors, or a combination of a DSP and a microprocessor.

The communication unit 403 is also referred to as a transceiver unit, and may be divided into a sending unit (not shown in FIG. 4) and a receiving unit (not shown in FIG. 4). The sending unit is configured to support the communication apparatus 400 in sending information to another network element. The receiving unit is configured to support the communication apparatus 400 in receiving information from another network element. For example, when the communication apparatus 400 is a terminal device, the communication apparatus 400 may send information to an access network device or another terminal device via the communication unit 403, or receive information from an access network device or another terminal device via the communication unit 403. When the communication apparatus 400 is an access network device, the communication apparatus 400 may send information to a terminal device via the communication unit 403, or receive information from a terminal device via the communication unit 403. In addition, when the communication apparatus 400 is an access network device, the communication apparatus 400 further includes a unit that communicates with another access network device or a core network device. Details are not described herein.

The communication unit 403 may be a communication interface, a transceiver, a transceiver circuit, or the like. The communication interface is a general term. In specific implementation, the communication interface may include a plurality of interfaces, for example, may include an interface (for example, a sidelink interface) between terminal devices and/or an air interface between a terminal device and an access network device.

The communication apparatus 400 may further include a storage unit 401. The storage unit is mainly used by the communication apparatus 400 to store a software program and data. The data may include but is not limited to original data, intermediate data, or the like.

The storage unit 401 may be a memory.

The communication apparatus 400 may be a terminal device, or may be an access network device.

When the processing unit 402 is a processor, the communication unit 403 is a communication interface, and the storage unit 401 is a memory, the communication apparatus 400 in this embodiment of this application may be shown in FIG. 5.

Refer to FIG. 5. A communication apparatus 500 includes a processor 502, a transceiver 503, and a memory 501.

The transceiver 503 may be an independently disposed transmitter, and the transmitter may be configured to send information to another device. Alternatively, the transceiver may be an independently disposed receiver, configured to receive information from another device. Alternatively, the transceiver may be a component that integrates information sending and receiving functions. A specific implementation of the transceiver is not limited in this embodiment of this application.

Optionally, the communication apparatus 500 may further include a bus 504. The transceiver 503, the processor 502, and the memory 501 may be connected to each other through the bus 504. The bus 504 may be a peripheral component interconnect (Peripheral Component Interconnect, PCI for short) bus or an extended industry standard architecture (Extended Industry Standard Architecture, EISA for short) bus, or the like. The bus 504 may be classified as an address bus, a data bus, a control bus, or the like. For ease of representation, only one bold line is used for indication in FIG. 5, but it does not indicate that there is only one bus or only one type of bus.

A person skilled in the art can understand that various explanatory logic blocks, modules, circuits, and algorithms described with reference to the various aspects disclosed in this application may be implemented as electronic hardware, instructions that are stored in a memory or another computer-readable medium and that are executed by a processor or another processing device, or a combination thereof. In an example, the device described in this specification may be used in any circuit, hardware component, integrated chip (integrated circuit, IC), or IC chip. The memory disclosed in this application may be any type of memory in any size, and may be configured to store any type of needed information. To clearly explain such interchangeability, various explanatory components, blocks, modules, circuits, and steps have been generally described above based on functionality. How to implement such functionality depends on a specific application, a design selection, and/or a design constraint that is imposed on an entire system. A person skilled in the art may use different manners to implement the described functionality for each particular application, but it should not be considered that such implementation determining goes beyond the protection scope of this application.

For ease of understanding embodiments of this application, the following first briefly describes terms in embodiments of this application. It should be understood that these descriptions are merely intended to facilitate understanding of embodiments of this application, and shall not constitute any limitation on this application.

1. Interface: A communication interface (Uu interface) between a user equipment and a network device may be referred to as a Uu interface, a communication interface (PC5 interface) between user equipments may be referred to as a PC5 interface, and a transmission link in the PC5 interface is defined as a sidelink (sidelink, SL).

2. Unlicensed band (unlicensed spectrum): In a wireless communication system, used bands may be classified into licensed bands and unlicensed bands. In the licensed band, a user uses a spectrum resource based on scheduling of a central node. In the unlicensed band, a transmit node needs to use a spectrum resource in a contention manner. Specifically, the transmit node contends for a channel in a listen before talk (listen before talk, LBT) manner. In a next-generation 5G NR system, NR protocol technologies in the unlicensed bands are collectively referred to as NR-U, and communication performance of a corresponding Uu interface is expected to be further improved by using the NR-U. Enabling SL communication in the unlicensed bands in local space is an important evolution direction, and corresponding protocol technologies may be collectively referred to as SL-U. Similar to the Uu interface, a UE that operates by using the SL-U also need to coexist with a nearby Wi-Fi device based on an LBT mechanism. A reason why the LBT mechanism becomes a mandatory feature of the unlicensed band is that each region in the world has a regulation (regulation) requirement on use of the unlicensed band. UEs in various forms operating in different communication protocols can use the unlicensed band only when a regulation is met, so that the spectrum resource is fairly and efficiently used.

3. LBT: Energy-based detection and signal class-based detection are generally used for an LBT channel access manner. For example, in 3GPP, energy-based detection is used in NR-U, and a combination of the two detection methods is used in Wi-Fi. A detection threshold (Energy Detection Threshold) needs to be set for the energy-based detection. When detected energy exceeds the detection threshold, it is determined that a channel is busy, and access to the channel is not allowed. When detected energy is lower than the detection threshold for more than a period of time, access to a channel is allowed. Specifically, LBT may include the following several types.

**Category 1 LBT (Category 1 LBT):** Information is immediately sent after a short switching gap (switching gap). The category 1 LBT, cat 1 LBT for short, is used by a communication device to immediately send information after a switching gap from a receiving state to a sending state in channel occupancy time (channel occupancy time, COT). The COT is time in which the communication device is allowed to occupy a channel after successfully accessing the channel, and time of the switching gap usually cannot be greater than 16 $\mu$s.

**Category 2 LBT (Category 2 LBT):** LBT without random back-off. The category 2 LBT, cat 2 LBT for short, is used by a communication device to send information without performing the random back-off after the communication device senses that a channel is in an idle state for a period of determined time.

**Category 3 LBT (Category 3 LBT):** LBT with random back-off with a fixed-size contention window (contention window, CW). The category 3 LBT, cat 3 LBT for short, is used by a communication device to generate a random number N based on the fixed-size contention window, and send information after the communication device senses that a channel is in an idle state for a period of time determined based on the random number N. The size of the contention window is related to a minimum value and a maximum value of N.

**Category 4 LBT (Category 4 LBT):** LBT with random back-off with a variable-size contention window. The category 4 LBT, cat 4 LBT for short, is used by a communication device to generate a random number N based on the variable-size contention window, and send information after the communication device senses that a channel is in an idle state for a period of time determined based on the random number N. The size of the contention window is related to a minimum value and a maximum value of N, and the communication device may change the size of the contention window.

A communication device in an NR-U system (NR-U device for short) complies with a 3GPP protocol, and LBT is used as a channel access mechanism. Specifically, the NR-U device uses the following several types of LBT:

**Type 1 LBT:** Cat 4 LBT. The NR-U device can access a channel and send information only after performing random back-off.

Specifically, the NR-U device (including an access network device and/or a terminal device) may send information after sensing that a channel is idle in sensing time (referred to as sensing slot duration (sensing slot duration) in prolonged duration (defer sensing, denoted as $T_d$) in embodiments of this application) and after a counter $N$ in the following step 4 is zero. Specifically, according to the following steps, the counter $N$ is adjusted in additional sensing slot duration obtained by sensing the channel.

Step 1: Set $N = N_{init}$, where $N_{init}$ is a random number evenly distributed between 0 and a size $CW_p$ that is of a contention window and that corresponds to a channel access priority class (channel access priority class, CAPC) p; and perform step 4.

Step 2: If $N > 0$ and the NR-U device (the access network device and/or the terminal device) chooses to decrease the counter progressively, set $N = N - 1$.

Step 3: Sense the channel at a time granularity of a sensing time unit (referred to as a sensing slot $T_{sl}$ in embodiments of this application (in embodiments of this application, it is assumed that $T_{sll} = 9$ $\mu$s), but this is not limited thereto); and if the channel is idle at the time granularity of sensing, perform step 4, or if the channel is not idle at the time granularity of sensing, perform step 5.

Step 4: If $N = 0$, stop the procedure; or if N is not 0, perform step 2.

Step 5: Continue to sense the channel, until it is sensed that the channel is busy in one $T_{sl}$ in other $T_d$, or until it is sensed that the channel is detected as idle in all sensing slots $T_{sl}$ in other $T_d$.

Step 6: If the channel is detected as idle in all the sensing slots $T_{sl}$ in the other $T_d$, perform step 4; or if the channel is not detected as idle in all the sensing slots $T_{sl}$ in the other $T_d$, perform step 5.

$T_d$ includes duration $T_f$ (in embodiments of this application, it is assumed that $T_f = 16$ $\mu s$, but this is not limited thereto) and $m_p$ continuous pieces of $T_{sl}$ following the duration, $CW_{min,p} \leq CW_p \leq CW_{max,p}$, $CW_{min,p}$ is a minimum size that is of the contention window and that corresponds to the channel access priority class p, and $CW_{max,p}$ is a maximum size that is of the contention window and that corresponds to the channel access priority class p.

The NR-U device selects $CW_{min,p}$ and $CW_{max,p}$ before step 1. $m_p$, $CW_{min,p}$, and $CW_{max,p}$ are associated with the channel access priority class $p$ of the NR-U device. Specifically, for a downlink CAPC, an association relationship between a channel access priority class p of the access network device, $m_p$, $CW_{min,p}$, $CW_{max,p}$, and $T_{mcot,p}$ is described in Table 1. For an uplink CAPC, an association relationship between a channel access priority class p of the terminal device, $m_p$, $CW_{min,p}$, $CW_{max,p}$, and $T_{mcot,p}$ is shown in Table 2.

**Table 1 Downlink (downlink, DL) CAPC**

| Channel access priority class ($p$) | $m_p$ | $CW_{min, p}$ | $CW_{max, p}$ | $T_{m\,cot, p}$ | Allowed $CW_p$ size |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 m | {15, 31, 63} |
| 4 | 7 | 15 | 1023 | 8 or 10 m | {15, 31, 63, 127, 255, 511, 1023} |

**Table 2 UL CAPC**

| Channel access priority class ($p$) | $m_p$ | $CW_{min, p}$ | $CW_{max, p}$ | $T_{m\,cot, p}$ | Allowed $CW_p$ size |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

$T_{m\,cot, p}$ is a maximum value of COT corresponding to the channel access priority class p, and is usually specified by a law and regulation. COT of sending information by the NR-U device (the access network device and/or the terminal device) on the channel cannot exceed $T_{m\,cot, p}$. The allowed $CW_p$ size indicates a possible value of the size that is of the contention window and that corresponds to the channel access priority class.

The NR-U device maintains the size $CW_p$ of the contention window, and adjusts the value of $CW_p$ before step 1 according to the following steps:

Step a: For each channel access priority class $p \in \{1, 2, 3, 4\}$, set $CW_p = CW_{min, p}$.

Step b: In a HARQ-ACK feedback value corresponding to information sent by the NR-U device in a reference subframe $k$, if at least Z=80% is determined as a NACK, increase, to a next higher allowed value, a value of $CW_p$ corresponding to each channel access priority class $p \in \{1, 2, 3, 4\}$, and continue ACK/NACK determining in step b; or if less than Z=80% is determined as a NACK, perform step a of setting $CW_p = CW_{min, p}$. The reference subframe $k$ is a start subframe of latest transmission performed by the NR-U device on the channel.

<u>Type 2A LBT:</u> Cat 2 LBT with a gap of 25 $\mu$s. After sensing that a channel is idle for 25 $\mu$s, the NR-U device can access the channel and send information.

<u>Type 2B LBT:</u> Cat 2 LBT with a gap of 16 $\mu$s. After sensing that a channel is idle for 16 $\mu$s, the NR-U device can access the channel and send information.

<u>Type 2C LBT:</u> Cat 1 LBT with a gap of up to 16 $\mu$s. The NR-U device does not need to sense a channel, and may directly access the channel and send information after a switching gap of up to 16 $\mu$s in COT.

It may be understood that sending information and receiving information in this application may be alternatively replaced with sending data and receiving data. For example, sending first information may be replaced with sending first data, and receiving first information may be replaced with receiving first data. Unless otherwise specified, sending information and sending data may be interchanged, and receiving information and receiving data may be interchanged.

4. Sidelink control information (sidelink control information, SCI)

The SCI is classified into first-stage SCI (1st-stage SCI) and second-stage SCI (2nd-stage SCI). The first-stage SCI is carried on a PSCCH, and the first-stage SCI is used to schedule the second-stage SCI and a PSSCH. Because an SL is a distributed system, a receive end terminal apparatus can decode the PSSCH only after correctly decoding the first-stage SCI. In embodiments of this application, information carried on the PSSCH is described as data channel information. The data channel information includes data information, the second-stage SCI, and the like.

To reduce complexity of blind detection (blind decoding) performed by the terminal apparatus on the PSCCH, a time-frequency resource position of the PSCCH is fixed, and a format of the first-stage SCI carried on the PSCCH is also unique. In other words, the terminal apparatus does not need to obtain, through blind detection, the time-frequency resource position of the PSCCH, and does not need to obtain SCI in different formats through blind detection. The terminal apparatus only needs to detect, at a fixed time-frequency resource position of the PSCCH, whether the first-stage SCI exists. The PSCCH exists in each sub-channel of each slot.

The first-stage SCI includes a frequency domain resource assignment (frequency resource assignment) field and a time domain resource assignment (time resource assignment) field. The frequency domain resource assignment field indicates a frequency domain resource of the PSSCH, and the time domain resource assignment field indicates a time domain resource of the PSSCH. Optionally, the first-stage SCI further includes a resource reservation period (resource reservation period) field. The resource reservation period field indicates a period of the PSSCH for resource reservation. A value of the resource reservation period field is configured by a network device, preconfigured (pre-configuration), or predefined. For example, the network device indicates the time domain resource, the frequency domain resource, and the period that are of the PSSCH to the terminal apparatus by using radio resource control (radio resource control, RRC) signaling. Content indicated by the RRC signaling may be determined based on sl-ResourceReservePeriod.

The second-stage SCI is carried on the PSSCH. The second-stage SCI does not occupy resources of the PSCCH, a demodulation reference signal (demodulation reference signal, DMRS), and a phase tracking reference signal (phase tracking reference signal, PT-RS). The second-stage SCI is mainly used for hybrid automatic repeat request (hybrid automatic repeat request, HARQ) feedback of an NR SL, for example, indicating related information such as a HARQ process number (process number), a source identifier (source ID), and a destination identifier (destination ID). A second-stage SCI format is indicated by a second-stage SCI format ($2^{nd}$-stage SCI format) field in the first-stage SCI. For example, the second-stage SCI format field in the first-stage SCI is shown in Table 3.

Table 3

| Value of a second-stage SCI format field (Value of $2^{nd}$-stage SCI format field) | Second-stage SCI format ($2^{nd}$-stage SCI format) |
| --- | --- |
| 00 | SCI format 2-A |
| 01 | SCI format 2-B |
| 10 | SCI format 2-C |
| 11 | Reserved |

In Table 3, when the value of the second-stage SCI format field in the first-stage SCI is 00, the second-stage SCI format is 2-A. When the value of the second-stage SCI format field is 01, the second-stage SCI format is 2-B. When the value of the second-stage SCI format field is 10, the second-stage SCI format is 2-C.

It should be noted that in embodiments of this application, that X information is configured by the network device may be understood as one of the following two implementations: In a possible implementation, the network device configures the X information for the terminal apparatus by using RRC signaling or a system information block (system information block, SIB) message. Alternatively, in another possible implementation, the network device indicates the X information to the terminal apparatus by using downlink control information (downlink control information, DCI). Alternatively, the X information may be preconfigured, and may be understood as that the X information is preconfigured when the terminal apparatus is delivered from a factory. Alternatively, the X information may be predefined, and may be understood as that the X information is defined in a communication standard protocol or a regional or national law or specification, and does not need to be obtained through configuration, indication, or calculation. The X information may be the period of the PSSCH for periodic resource reservation. For a part of or all parameters in a parameter set corresponding to each piece of data in embodiments of this application, refer to descriptions in S701. Details are not described herein.

5. SL resource pool (resource pool)

The SL resource pool may be understood as a set of time-frequency resources, and is used for sidelink communication between terminal apparatuses. Optionally, the SL resource pool further includes a code domain resource. The SL resource pool includes a resource for sending and receiving a physical channel by a terminal apparatus. The physical channel includes at least one of the following: a PSCCH, a PSSCH, a physical sidelink discovery channel (physical sidelink discovery channel, PSDCH), a physical sidelink feedback channel (physical sidelink feedback channel, PSFCH), and a physical sidelink broadcast channel (physical sidelink broadcast channel, PSBCH). The PSCCH is used to carry first-stage SCI. The PSSCH is used to carry data channel information, for example, at least one of second-stage SCI, data information, and feedback information of sidelink channel state information (channel state information, CSI). The PSDCH is used to carry a discovery message. The PSFCH is used to carry sidelink feedback information. The sidelink feedback information includes acknowledgment feedback information for the data channel information, for example, HARQ acknowledgment feedback information. The HARQ acknowledgment feedback information includes an acknowledgment (acknowledge, ACK) or a negative acknowledgment (negative acknowledge, NACK). Optionally, the sidelink feedback information may further include CSI feedback information. Alternatively, the sidelink feedback information may indicate at least one of the following information: energy saving information, resource assistance information, or the like. The resource assistance information indicates at least one of the following: a resource recommended for use, a resource not recommended for use, a resource collision, a resource reservation collision, a half-duplex collision that has occurred in the past or is about to occur in the future, or the like. The PSBCH is used to carry information related to sidelink synchronization.

The SL resource pool includes one or more time units in time domain. One time unit may be one or more symbols, one or more slots (slots), one or more mini-slots (mini-slots), one or more subframes, one or more frames, or the like. In one SL resource pool, a plurality of time domain units may be continuous or discrete in terms of time. In this application, only the slot is used as an example for description.

The SL resource pool includes one or more frequency domain units in frequency domain. One frequency domain unit may be one or more resource elements (resource elements, REs), one or more resource blocks (resource blocks, RBs), or one or more sub-channels (sub-channels). A size of the sub-channel may be understood as a quantity of one or more continuous (continuous) or interlaced (interlaced) RBs included in the sub-channel in frequency domain. For example, one sub-channel may include 10, 12, 15, 20, 25, or 50 sub-channels. In this application, only the sub-channel is used as an example for description.

For definitions of the symbol, the mini-slot, the slot, the subframe, the frame, the RE, the RB, and the sub-channel in embodiments of this application, refer to related technical specifications of the 3rd generation partnership project (3rd generation partnership project, 3GPP).

6. Resource sensing of a sidelink SL

The 3GPP release (Release, Rel) 16 defines two resource assignment modes for the SL: a mode 1 and a mode 2. In the mode 1, an access network device (for example, a base station) schedules or configures resources for a transmit terminal device and a receive terminal device corresponding to the transmit terminal device. The sidelink resource assignment mode 1 (mode 1) is usually used for sidelink communication within a coverage range of the base station. Dynamic scheduling in the mode 1 is used as an example. The base station centrally assigns resources based on buffer status report (Buffer Status Report, BSR) statuses of the terminal devices. Specifically, the base station notifies the transmit terminal device of a time-frequency resource of sidelink data by using downlink control information (downlink control information, DCI), and the transmit terminal device sends, after receiving the DCI, sidelink control information (sidelink control information, SCI) and data to the receive terminal device on the indicated resource. In the mode 1, sidelink transmission resources of the terminal devices are centrally scheduled by the base station, so that a collision can be avoided.

In the mode 2, a resource used for SL transmission is determined by the transmit terminal device through channel sensing (also referred to as channel sensing) and selection, and a core of the mode 2 is a resource reservation process. In this case, the terminal device may work in a scenario without network coverage. The mode 2 supports resource reservation, and resource reservation information is indicated in SCI.

In the mode 2, when data needs to be sent, specifically, when a new transport block (transmission block, TB) is generated, or a previously reserved resource is not suitable for transmission of a newly generated TB in a semi-static assignment solution, a higher layer triggers SL resource selection. When the SL resource selection is triggered in a slot *n,* the transmit terminal device determines a candidate resource in a resource selection window (resource selection window, RSW) based on resource reservation information that is of another terminal device and that is sensed in a sensing window (sensing window), to perform transmission of a TB. The TB carries the data that needs to be sent. For example, assuming that the SL resource selection is triggered in the slot n, specific steps of resource assignment in the mode 2 are as follows:

Step (1): Determine the resource selection window.

A slot range of the resource selection window is slots $[n+T_1,n+T_2]$. $T_1$ is determined based on a capability of a terminal device, and $T_2$ is determined based on a packet delay budget (packet delay budget, PDB).

For example, $0 \leq T_1 \leq T_{proc,1}^{SL}$ , and selection of $T_1$ is implemented based on an implementation.

If $T_{2min}$ (configured by the higher layer) is less than a remaining PDB (data packet delay), $T_{2min} \leq T_2 \leq PDB$ (data packet delay), selection of $T_2$ is implemented based on an implementation. If $T_{2min}$ (configured by the higher layer) is not less than a remaining PDB (data packet delay) (that is, $T_{2min} \geq$ remaining PDB), $T_2$ is equal to the remaining *PDB.* $T_{proc,1}^{SL}$ indicates a delay in selecting a resource and sending data by the terminal device, and includes a processing delay in determining the resource selection window by the terminal device. A correspondence between a value of $T_{proc,1}^{SL}$ and a subcarrier spacing $\mu_{SL}$ used during transmission is shown in Table 4.

Table 4

| $\mu_{SL}$ | $T_{proc,1}^{SL}$ **(Slot)** |
|---|---|
| 0 | 3 |
| 1 | 5 |
| 2 | 9 |
| 3 | 17 |
| $\mu_{SL}$ indicates the subcarrier spacing SCS, and one value of $\mu_{SL}$ indicates one type of SCS. | |

Step (2): Determine the sensing window.

A slot range of the sensing window is $\left[ n - T_0, n - T_{proc,0}^{SL} \right)$, $T_0$ is configured by s, for example, is indicated by a higher-layer parameter *sl-SensingWindow,* and $T_{proc,0}^{SL}$ indicates a delay in processing a sensing result in the sensing window by the terminal device. A correspondence between a value of $T_{proc,0}^{SL}$ and the subcarrier spacing used during the transmission is shown in Table 5.

Table 5

| $\mu_{SL}$ | $T_{proc,0}^{SL}$ **(Slot)** |
|---|---|
| 0 | 1 |
| 1 | 1 |
| 2 | 2 |
| 3 | 4 |

In the sensing window, the terminal device continuously senses each slot in a resource pool, decodes SCI on a physical sidelink control channel (physical sidelink control channel, PSCCH) in each slot, and measures a reference signal received power (reference signal received power, RSRP) of a demodulation reference signal (demodulation reference signal, DMRS) on the PSCCH and/or a reference signal received power of a demodulation reference signal on a physical sidelink shared channel (physical sidelink shared channel, PSSCH) scheduled by using the PSCCH.

Step (3): Determine a reference signal received power RSRP threshold Th($p_i$, $p_j$) . Specifically, the RSRP threshold *Th($p_i$, $p_j$)* related to $p_i$ and $p_j$ is determined based on a priority $p_i$ = $prio_{RX}$ indicated in the received SCI and a priority $p_j$ = $prio_{TX}$ that is configured by the higher layer and that corresponds to the TB transmitted by the terminal device. Th($p_i$, $p_j$) is specifically a ($prio_{RX}$+($prio_{TX}$-1)*8)th threshold in an RSRP threshold set configured by using the resource pool. It may be understood that the priority indicated in the SCI may be a channel access priority class, and/or a service priority or a data priority of to-be-sent data. This is not limited in this application.

Step (4): Determine an initial candidate resource set $S_A^{Initial}$.

A candidate resource set is also referred to as an available resource set, and correspondingly, determining the initial candidate resource set is also referred to as determining an initial available resource set.

The initial candidate resource set $S_A^{Initial}$ includes all candidate resources that are in the resource selection window and that are in the SL resource pool. A candidate resource $R_{x,y}$ is defined as $L_{subCH}$ contiguous sub-channels starting from a sub-channel x in a slot. A total quantity of candidate resources in the initial candidate resource set $S_A^{Initial}$ is denoted as $M_{total}$.

Step (5): For a candidate resource $R_{x,y}$ (it is assumed that the candidate resource is located in a slot $t_y'^{SL}$ ) in the initial candidate resource set $S_A^{Initial}$, if the following two conditions are met at the same time, exclude the candidate resource from $S_A^{Initial}$ :

(a) The terminal device does not perform channel sensing or channel sensing in the slot $t'^{SL}_m$ (for example, the terminal device is in a sending state in the slot). $t'^{SL}_m$ is a slot in the sensing window.

(b) Assuming that first-stage SCI is received in $t'^{SL}_m$, the candidate resource $R_{x,y}$ overlaps a slot of a periodically reserved resource configured by using the resource pool, for example, a slot of a periodically reserved resource configured by using a higher-layer parameter *sl-ResourceReservePeriodList*.

Step (5a): If a ratio of a quantity of remaining candidate resources in $S_A^{Initial}$ after step (5) to $M_{total}$ is X, perform step (4) again. After step (4) is performed again, step (6) may be performed, and the excluding in step (5) no longer takes effect.

Step (6): For a candidate resource $R_{x,y}$ (it is assumed that the candidate resource is located in a slot $t'^{SL}_y$ ) in $S_A^{Initial}$ , if the following three conditions are met at the same time, exclude the candidate resource from $S_A^{Initial}$ :

(a) The terminal device decodes, in the slot $t'^{SL}_m$ , SCI carried on a PSCCH. A value indicated by a resource reservation period field in the SCI is $P_{rsvp\_RX}$ (in a unit of ms), and is converted to a period $P'_{rsvp\_RX}$ in a unit of a slot. In addition, a priority indicated by a priority (*Priority*) field in the first-stage SCI is $prio_{RX}$. A sub-channel resource occupied by the PSCCH and a PSSCH scheduled by the PSCCH in frequency domain is $R_{RX}$.
(b) An RSRP of a DMRS on the PSCCH or an RSRP of a DMRS on the PSSCH scheduled by using the PSCCH is higher than the RSRP threshold determined in step (3).
(c) A reserved resource indicated by the SCI is located in the resource selection window.

It may be understood that, for a slot $t'^{SL}_m$ in the sensing window, the terminal device needs to perform only one of step (5) and step (6). In other words, if the terminal device does not perform channel sensing in the slot $t'^{SL}_m$ in the sensing window, step (5) is performed; or if the terminal device decodes first-stage SCI of a PSCCH in the slot $t'^{SL}_m$ in the sensing window, step (6) is performed.

Step (7): If a quantity of remaining single-slot candidate resources in $S_A^{Initial}$ is less than $X\% \cdot M_{total}$, increase the RSRP threshold in step (3) (increase the RSRP threshold by 3 dB each time), and return to step (4) to continue the procedure. If a quantity of remaining candidate resources in $S_A$ is greater than $X\% \cdot M_{total}$, report $S_A$ to the higher layer.

According to the foregoing steps, after selecting the resource, the terminal device notifies another terminal device of a reservation message by using SCI. In addition, if completing LBT before the resource reservation, the terminal device may send data by using the selected time-frequency resource.

Transmission of the data may be performed in a form of a TB. One TB may further include SCI. The SCI includes a data transmission process number and resource reservation information. For example, when a terminal apparatus periodically reserves a resource, the resource reservation information may include period information, and the period information indicates a resource reservation period of the terminal apparatus. It should be understood that reserving a resource may be understood as that a terminal apparatus reserves some subsequent time-frequency resources. The terminal apparatus may receive and send data on the reserved resource, or the terminal apparatus may not use the reserved resource, that is, the reserved resource is not used. This is not limited in embodiments of this application.

For example, time-frequency resources ($r_0$, $r_1$, $r_2$, ...) are randomly selected from $S_A$ to send data. Before the sending, resource re-evaluation is performed on ($r_0$, $r_1$, $r_2$, ...). After the re-evaluation, preemption detection is performed on resources ($r_0'$, $r_1'$, $r_2'$, ...) selected from $S_A$. The resources ($r_0'$, $r_1'$, $r_2'$, ...) are logical slots.

The terminal device performs resource re-evaluation and preemption detection at least at a moment of a slot m- $T_3$ ($T_3$=$T_{(proc,1)}^{SL}$), and the UE may trigger the resource re-evaluation and/or the preemption detection before and after the

slot m-$T_3$ based on an implementation. Whether $(r_0, r_1, r_2, ...)$ and $(r_0', r_1', r_2', ...)$ need to be excluded is determined according to steps 1 to 7.

If $r_i$ and/or $r_i'$ in $(r_0, r_1, r_2, ...)$ and $(r_0', r_1', r_2', ...)$ do not belong to $S_A$ (that is, $r_i$ and $r_i'$ are separately excluded during the re-evaluation and/or the preemption detection), $r_i$ and/or $r_i'$ are reselected. A slot m is a next slot to be sent. In other words, the slot m belongs to $(r_0, r_1, r_2, ...)$ and $(r_0', r_1', r_2', ...)$.

In an unlicensed spectrum-based communication system, after completing LBT, a terminal apparatus needs to perform continuous transmission in COT to occupy a channel. If a terminal apparatus does not perform continuous transmission in COT to occupy a channel, the channel may be accessed by another terminal apparatus, so that the continuous transmission is interrupted. However, an SL resource sensing process in an SL-U communication system is performed in a unit of one TB, and a resource is randomly selected from an available resource set. In this case, a channel cannot be continuously occupied for data transmission because the channel may be preempted by another terminal apparatus. Consequently, a channel contention process needs to be performed again, and transmission performance is affected. Therefore, an SL resource selection procedure needs to be improved to meet a continuous transmission requirement of the SL-U system.

In view of this, this application provides a communication method. The communication method in embodiments of this application is applied to the communication system in FIG. 1, FIG. 2, or FIG. 3. In the communication method in embodiments of this application, a terminal device determines an available resource set $S_A$ in a resource selection window based on N parameter sets, where the N parameter sets correspond to N pieces of data, data i corresponds to a parameter set i, N is a positive integer greater than 1, i is an integer greater than or equal to 0 and less than N, and the parameter set i includes at least one of the following parameters: a sending priority $prio_{TX,i}$, a data delay budget $PDB_i$, a frequency domain resource unit $L_{subCH,i}$, or a channel access priority class $CAPC_i$; and sends the N pieces of data on a resource in $S_A$. In the communication method, a common available resource set $S_A$ is shared by a plurality of pieces of data, so that the terminal device selects continuous time units from the available resource set $S_A$ to perform transmission of the plurality of pieces of data. Therefore, continuous use of time units is improved, and a risk that a channel is preempted by another terminal device is reduced, thereby improving data transmission performance.

Further, this application provides an apparatus and a system for sending information about an unlicensed spectrum.

With reference to the drawings, the following describes in detail the method provided in embodiments of this application. It is worth noting that, although an SU-L device is used as an example for description in embodiments of this application, embodiments of this application are not limited thereto. The method provided in embodiments of this application may be further applied to any device that uses an unlicensed spectrum and can implement device-to-device communication. In addition, in embodiments of this application, a time unit is described by using a slot slot as an example. It is worth noting that, although the slot is used as an example for description in embodiments of this application, embodiments of this application has no limitation that the time unit is necessarily the slot, and the time unit may alternatively be another term, for example, a subframe or a mini-slot (Mini-Slot).

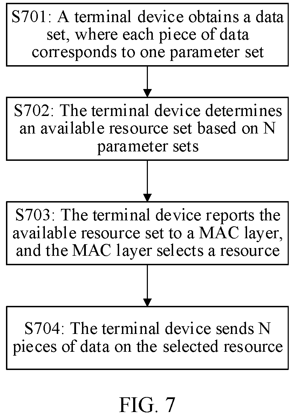

As shown in FIG. 7, a communication method provided in an embodiment of this application includes the following steps.

S701: A terminal device obtains a data set, where the data set includes N pieces of data, and N is a positive integer greater than 1. Each piece of data corresponds to one parameter set, in other words, data i corresponds to a parameter set i, and i is an integer greater than or equal to 0 and less than N.

In this embodiment of this application, the data i may also be represented as $TB_i$.

Specifically, the parameter set i includes at least one of the following parameters: a sending priority $prio_{TX,i}$, a data delay budget $PDB_i$, a frequency domain resource unit $L_{subCH,i}$, or a channel access priority class $CAPC_i$. In other words, the data i corresponds to one or more of the parameters $prio_{TX,i}$, $PDB_i$, $L_{subCH,i}$, and $CAPC_i$.

Further, the parameter set i may further include a period $P_{rsvp\_TX,i}$, $T_{2min,i}$, and $X_i$ (determined based on $prio_{TX,i}$). It may be understood that a value of $X_i$ is [0, 1], in other words, is a number greater than or equal to 0 and less than 1. For example, for data 1, $X_1 = 0.2$; and for data 2, $X_2 = 0.3$.

The period $P_{rsvp\_TX,i}$ is a sending period corresponding to the data i of the terminal device. For a specific meaning, refer to the foregoing descriptions.

$L_{subCH,i}$ is a frequency domain granularity of a candidate resource $R_{x,y}$ corresponding to the data i of the terminal device. For a specific meaning, refer to the foregoing descriptions.

$X_i$ is a threshold of a ratio of an available resource set $S_{A,i}$ corresponding to the data i to an initial available resource set $S_{A,i}^{Initial}$ corresponding to the data i. For details, refer to X mentioned in step (5a) of the resource sensing process of the sidelink SL.

It may be understood that, $X_i$ may also be expressed as a threshold of a percentage of the available resource set $S_{A,i}$ corresponding to the data i in the initial available resource set $S_{A,i}^{Initial}$ corresponding to the data i. For example, for the data 1, $X_1$ = 20% indicates that $S_{A,1}$ = $S_{A,1}^{Initial} * 20\%$ ; and for the data 2, $X_2$ = 30% indicates that $S_{A,2} = S_{A,2}^{Initial} * 20\%$ .

Optionally, a higher layer of the terminal device indicates the foregoing resource parameter set. Specifically, the higher layer may separately indicate the parameter set i corresponding to the data i. The higher layer herein may be a media access control (media access control, MAC) layer, a radio resource control (radio resource control, RRC) layer, or another protocol layer above a physical layer. This is not limited in this application.

Optionally, the higher layer of the terminal device indicates a part of parameters in the resource parameter set. Another parameter may be determined in another manner, for example, in a fixed manner of a protocol. For example, the higher layer separately indicates the sending priority $prio_{TX,i}$, the data delay budget $PDB_i$, and the like that are in the parameter set i corresponding to the data i. This is not limited in this application.

Optionally, the higher layer of the terminal device indicates a parameter set corresponding to a part of the N pieces of data, and a parameter set of other data may be in another manner, for example, in a fixed manner of a protocol. For example, the higher layer indicates a parameter set corresponding to M of the N pieces of data, and a parameter set corresponding to other N-M pieces of data is determined in another manner. This is not limited in this application.

Optionally, the higher layer of the terminal device indicates to perform continuous resource selection on all or a part of the N pieces of data.

Step S701 may be implemented by the processing unit 402 of the communication apparatus 400, or may be implemented by the processor 502 of the communication apparatus 500.

This step is optional.

S702: The terminal device determines an available resource set $S_A$ based on N parameter sets, where $S_A$ is located in a resource selection window.

Step S702 may be implemented by the processing unit 402 of the communication apparatus 400, or may be implemented by the processor 502 of the communication apparatus 500.

The N parameter sets correspond to the N pieces of data, the data i corresponds to the parameter set i, N is a positive integer greater than 1, i is an integer greater than or equal to 0 and less than N, and the parameter set i includes at least one of the following parameters: the sending priority $prio_{TX,i}$, the data delay budget $PDB_i$, the frequency domain resource unit $L_{subCH,i}$, or the channel access priority class $CAPC_i$. For specific descriptions, refer to the descriptions in step S701.

It may be understood that, in this embodiment of this application, that the data i corresponds to the parameter set i has a same expressed meaning as that the parameter set i corresponds to the data i. Similarly, that the N parameter sets correspond to the N pieces of data has a same meaning as that the N pieces of data correspond to the N parameter sets, and that each piece of data corresponds to one parameter set has a same meaning as that each parameter set corresponds to one piece of data.

S703: The terminal device reports $S_A$ to the MAC layer, and the MAC layer selects a resource.

Specifically, after determining $S_A$, the terminal device reports $S_A$ to the higher layer.

Step S703 may be implemented by the processing unit 402 of the communication apparatus 400, or may be implemented by the processor 502 of the communication apparatus 500.

This step is optional. In other words, a resource selection process may be implemented at the physical layer, and does not need to be reported to the MAC layer.

S704: The terminal device sends the N pieces of data on the selected resource.

Alternatively, the terminal device may send K pieces of data on a resource in $S_A$, where K is a positive integer less than or equal to N. Specifically, the K pieces of data are sent on continuous resources in $S_A$.

Step S704 may be implemented by controlling the communication unit 403 by the processing unit 402 of the communication apparatus 400, or may be implemented by controlling the transceiver 503 by the processor 502 of the communication apparatus 500.

The terminal device selects at least one resource from $S_A$ to send the N pieces of data. In an implementation, at least one resource that is continuous is selected from $S_A$ to send the N pieces of data. The resource herein may be a slot.

Specifically, that the MAC layer of the terminal device selects the at least one resource is up to a MAC layer implementation. In a possible manner, in one piece of COT, a new transmission (initial transmission) resource of the N pieces of data are first selected, and then a retransmission resource is selected. Alternatively, all resources in one piece of COT are new transmission resources. Alternatively, all resources in one piece of COT are retransmission resources. This is not limited in this application.

Further, after selecting the resource, the terminal device notifies another device of reservation information of the resource by using SCI.

Further, after selecting the resource, the terminal device completes LBT before the resource, to preempt the resource to send data.

Further, optionally, assuming that a resource selected and/or reserved by the terminal device is located in a slot m, the terminal device may trigger resource re-evaluation and/or preemption detection before and after a slot $m-T_3$, to determine whether the resource selected and/or reserved by the terminal device is still in the determined set $S_A$.

In this embodiment of this application, the resource selection may be understood as resource reservation, and the selected resource may also be referred to as a reserved resource.

According to the method provided in this embodiment of this application, the terminal device may determine an available resource set by using a plurality of pieces of data as a whole, and select continuous slot resources in $S_A$ for the plurality of pieces of data, to ensure that the plurality of pieces of data are in a same piece of COT. In this way, data can be sent on continuous resources in $S_A$, a risk that a resource is preempted by another terminal device is reduced, and a probability of continuously sending data is improved. In addition, data transmission performance is finally improved.

In addition, the communication method may further reduce a channel preemption (LBT) process performed by the terminal device, to reduce a conflict with another terminal device.

It may be understood that a CAPC of COT corresponding to a continuously selected resource needs to be determined based on a lowest CAPC (that is, a lowest priority) in CAPCs of all pieces of data, to meet a regulatory requirement.

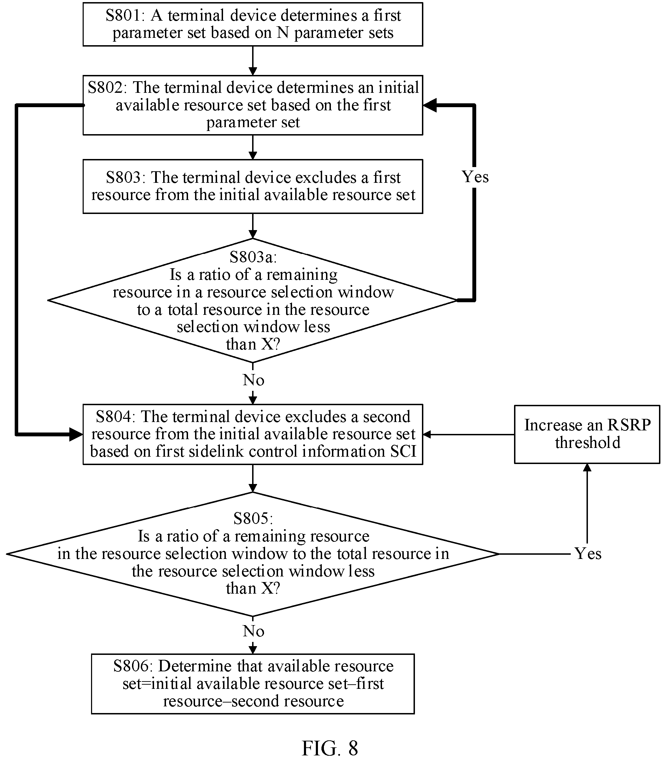

With reference to FIG. 8, the following describes in detail an implementation of the process of determining $S_A$ in step S702.

S801: A terminal device determines a first parameter set based on N parameter sets, where the first parameter set corresponds to a data set.

Specifically, a MAC layer or a physical PHY layer of the terminal device combines parameters included in the N parameter sets corresponding to N pieces of data, to obtain the first parameter set.

The first parameter set includes at least one of the following: a first sending priority $prio_{TX}$, a first data delay budget $PDB$, a first frequency domain resource unit $L_{subCH}$, or a first channel access priority class $CAPC$.

Specifically, $prio_{TX} = max(prio_{TX,i})$, $PDB = min(PDB_i)$, $L_{subCH} = max(L_{subCH,i})$, $CAPC = max(CAPC_i)$, max() indicates taking a maximum value in N values, and min() indicates taking a minimum value in N values. It should be noted that, a larger value usually indicates a lower priority. Therefore, in this application, taking a priority with a largest value in N priorities is equivalent to taking a lowest priority. It is clear that this is not specifically limited in this application.

Optionally, $L_{subCH} = 1$, $prio_{TX} = max(prio_{TX,i})$, $PDB = min(PDB_i)$, and $CAPC = max(CAPC_i)$.

Further, optionally, parameters $P_{rsvpTX,i}$, $T_{2min,i}$, and $X_i$ corresponding to the N pieces of data may be the same. In this case, the first parameter set includes at least one of $P_{rsvp\_TX} = P_{rsvpTX,i}$, $T_{2min} = T_{2min,i}$, and $X = X_i$.

At least one parameter of a plurality of pieces of data is combined, so that the N pieces of data can be used as a whole to determine an available resource set.

S802: The terminal device determines an initial available resource set $S_A^{Initial}$ based on the first parameter set.

Specifically, $S_A^{Initial}$ includes all slots in a resource selection window in time domain, and includes any set that includes $L_{subCH}$ contiguous sub-channels in a resource pool in frequency domain.

For the resource selection window, refer to the foregoing descriptions in step 1 of the resource sensing process of the sidelink SL. It should be noted that in this embodiment of this application, values of $T_1$ and $T_2$ in the resource selection window $[n + T_1, n + T_2]$ are implemented based on an implementation, but $T_1$ and $T_2$ are determined by using a same parameter for the N pieces of data. Specifically, $T_1$ and $T_2$ may be determined by using the first parameter set.

For ease of description, this step is referred to as step a.

S803: The terminal device excludes a first resource from $S_A^{Initial}$, where the first resource is a slot that is in the resource selection window and that corresponds to a slot that is not sensed in a sensing window.

For the sensing window, refer to the foregoing descriptions in step 2 of the resource sensing process of the sidelink SL. It should be noted that in this embodiment of this application, $T_0$ in the sensing window $[n - T_0, n - T_{proc,0}^{SL})$ is configured by using a higher-layer parameter, and the N pieces of data use a same parameter, that is, sensing windows of the N pieces of data are the same, and $T_{proc,0}^{SL}$ is determined according to Table 5.

For this step, refer to the foregoing descriptions in step 5 of the resource sensing process of the sidelink SL.

Specifically, refer to FIG. 6, the sensing window corresponding to the N pieces of data is $[n - T_0, n - T_{proc,0}^{SL})$, and the resource selection window is $[n + T_1, n + T_2]$. Assuming that the terminal device does not perform channel sensing (sensing) because the terminal device is sending data in a slot $n - T_0$, the terminal device assumes, based on any period in *sl-ResourceReservePeriodList* configured by a higher layer, that a period of a resource that is reserved by another terminal device a corresponding to the slot is $P_{RSVP,a}$. In this case, the terminal device may assume that a slot $n + T_1 + 1$ after two $P_{RSVP,a}$ is also a resource reserved by the another terminal device a. In this case, the terminal device excludes the resource (in other words, the first resource includes a resource in the slot $n + T_1 + 1$) and excludes all subsequent resources that are in the selection window and whose periods are $P_{RSVP,a}$. Similarly, assuming that the terminal device does not perform channel sensing (sensing) because the terminal device is sending data in a slot $n - T_{proc,0} - 1$, the terminal device assumes, based on any period in *sl-ResourceReservePeriodList* configured by the higher layer, that a period of a resource that is reserved by another terminal device b corresponding to the slot is $P_{RSVP,b}$. In this case, the terminal device may assume that a slot $n + T_1 + 2$ after one $P_{RSVP,b}$ is also a resource reserved by the another terminal device b. In this case, the terminal device excludes the resource (in other words, the first resource includes a resource in the slot $n + T_1 + 2$) and excludes all subsequent resources that are in the selection window and whose periods are $P_{RSVP,b}$.

It may be understood that in step S803, the N pieces of data are processed as a whole.

For ease of description, this step is referred to as step b.

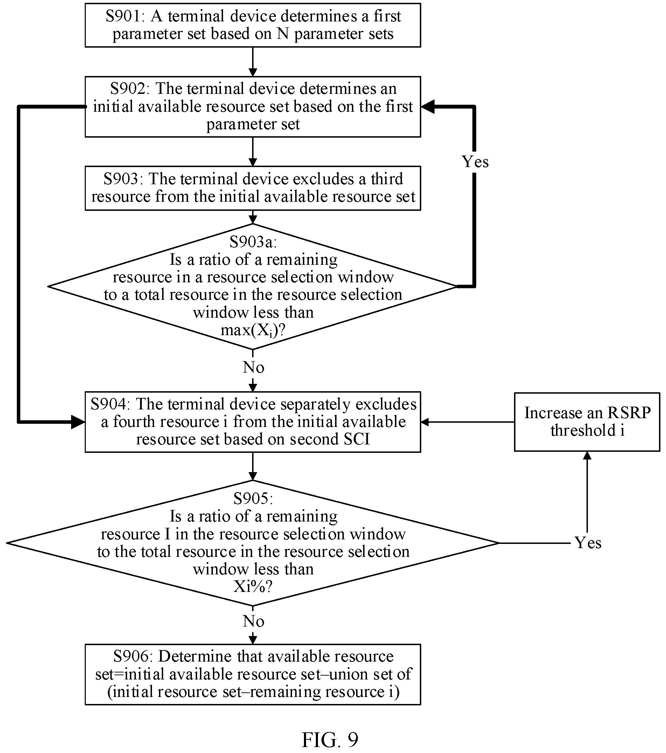

S803a: After performing S803, if a ratio of a remaining resource in the resource selection window to a total resource in the resource selection window is less than X, the terminal device performs S802 again, and then performs the following steps (in other words, after S802 is performed again, S803 and S803a are not performed, but S804 and a subsequent procedure are performed). In other words, after S802 is performed again, the first resource excluded in S803 no longer takes effect (as shown in a procedure indicated by bold lines in FIG. 8). It should be noted that the bold lines shown in FIG. 8 indicate a procedure from S803a to S802 and then to S804, instead of a process from S801 to S802 and then to S804. In other words, the terminal device first performs S801, then performs S802, S803, and S803a, and then performs S802 and S804 (skipping S803 and S803a) when a condition is met (as shown by "yes" on the bold line). Explanations of the bold line in FIG. 8 are also applicable to the bold line shown in FIG. 9. Details are not described again.

It may be understood that, in this step, it may be considered that if the ratio of the remaining resource in the resource selection window to the total resource in the resource selection window is less than X, the terminal device considers that this step is invalid, and directly uses the initial available resource set determined in S802 to perform the following steps.

In this application, X is referred to as a first threshold. X is related to $prio_{TX}$. Specifically, X is configured by using a resource pool configuration, for example, X=20%, X=30%, or X=50%.

After performing S803, if a ratio of a remaining resource in the resource selection window to the total resource in the resource selection window is greater than or equal to X, the terminal device continues to perform the following steps.

S804: The terminal device excludes a second resource from $S_A^{Initial}$ based on first sidelink control information SCI, where the second resource is a time unit corresponding to a reserved resource in the first SCI, a reference signal received power RSRP of the first SCI is greater than an RSRP threshold $Th_{RSRP}$, and the reserved resource in the first SCI is located in a time unit in the resource selection window.

For this step, refer to the foregoing descriptions in step 6 of the resource sensing process of the sidelink SL.

The terminal device successfully decodes the first SCI in a slot in the sensing window, and a resource reservation period field in the first SCI indicates a periodic resource. The periodic resource is a resource reserved by another terminal device or a retransmission resource indicated by another terminal device.

It may be understood that in embodiments of this application, the first SCI may be first-stage SCI, second-stage SCI, or first-stage SCI and second-stage SCI. This is not limited in this application.

When a resource in the periodic resource is located in the resource selection window, and the reference signal received power RSRP of the first SCI is greater than the RSRP threshold $Th_{RSRP}$, the resource that is in the selection window and that is in the periodic resource is excluded. In other words, the second resource includes the resource that is in the selection window and that is in the periodic resource.

Specifically, a reference signal of the first SCI may be a demodulation reference signal DMRS. In this case, in this step, the RSRP may be an RSRP obtained by measuring a demodulation reference signal (Demodulation Reference Signal, DMRS for short) on a physical layer sidelink shared channel (Physical Sidelink Shared Channel, PSSCH for short) scheduled by using the first SCI, and/or an RSRP obtained by measuring a DMRS on a PSCCH on which the first SCI is demodulated and carried. This is not limited in this application.

Specifically, for $Th_{RSRP}$, refer to the foregoing descriptions in step 3 of the resource sensing process of the sidelink SL.

It may be understood that $Th_{RSRP}$ is obtained by considering the N pieces of data as a whole.

For example, $Th_{RSRP}$ corresponding to the N pieces of data may be determined based on the first $prio_{TX}$ and a priority $prio_{RX}$ indicated in the first SCI. $Th_{RSRP}$ is specifically a $(prio_{RX}+(prio_{TX}-1)*8)^{th}$ threshold in an RSRP threshold set configured by using the resource pool.

Optionally, if there are a plurality of pieces of first SCI, priorities $prio_{RX}$ indicated in all pieces of SCI may be the same or may be different. In this case, $prio_{RX}$ used to determine $Th_{RSRP}$ corresponding to the N pieces of data may be a maximum value of $prio_{RX}$ indicated in all pieces of SCI, that is, $prio_{RX}$ with a lowest priority; may be a minimum value of $prio_{RX}$ indicated in all pieces of SCI, that is, $prio_{RX}$ with a highest priority; or may be another configured priority. This is not limited in this application.

For ease of description, this step is referred to as step c.

S805: After performing S804, if a ratio of a remaining resource in the resource selection window to the total resource in the resource selection window is less than X, the terminal device increases $Th_{RSRP}$ by a specific step size, and then performs S804 again, until a ratio of a remaining resource in the resource selection window to the total resource in the resource selection window is greater than or equal to X.

Specifically, the step size may be 3 dB, or may be another value. This is not limited in this application. The step size may be in a protocol, or may be configured by using the higher layer. This is not limited in this application.

It may be understood that, in a same slot in the sensing window, only one of S803 and S804 is performed. For example, in S803, because the terminal device is sending data but does not perform channel sensing, the terminal device does not receive the first SCI, and thus does not perform S804. Similarly, if the terminal device receives the first SCI, it indicates that the terminal device performs channel sensing in the slot.

It may be understood that, in the implementation of determining $S_A$ shown in FIG. 8, when the threshold is used for comparison in each step, "less than" may be replaced with "less than or equal to", and correspondingly, "greater than or equal to" may be replaced with "greater than". This is not limited in embodiments of this application.

S806: The terminal device determines that $S_A = S_A^{Initial} - first\ resource -\ second\ resource.$

In the foregoing implementation of determining $S_A$ shown in FIG. 8, the N pieces of data are used as a whole, the initial available resource set is determined by using a same parameter, and the first resource and/or the second resource are/is excluded by using a same parameter. In this way, a same available resource set can be determined for a plurality of pieces of data, and continuous slot resources are selected for the plurality of pieces of data in the set, so that data can be sent on continuous resources in $S_A$, a risk that a resource is preempted by another terminal device is reduced, and a probability of continuously sending data is improved. In addition, data transmission performance is finally improved.

With reference to FIG. 9, the following describes in detail another implementation of the process of determining $S_A$ in step S702.

For S901 to S903, refer to S801 to S803. Details are not described herein.

In subsequent steps of excluding a third resource and a fourth resource i, parameters respectively corresponding to different data are used. Therefore, step S902 may also be understood as determining initial resource sets respectively corresponding to N pieces of data.

In step S903, for a meaning of the third resource, refer to the first resource. Details are not described.

For ease of description, step S902 is referred to as step d, and step S903 is referred to as step e.

For S903a, refer to S803a. Different from S803a, in step S903a, thresholds corresponding to the N pieces of data are no longer the same, but each piece of data (parameter set) corresponds to one threshold Xi. The threshold Xi is referred to as a second threshold i in this application.

Therefore, in this step, after the third resource is excluded from an initial available resource set, each second threshold i is separately used for comparison.

If a ratio of a remaining resource in a resource selection window to a total resource in the resource selection window is less than max(Xi), that is, a maximum value of Xi, the terminal device performs S902 again, and then performs the following steps (in other words, after S902 is performed again, S903 and S903a are not performed again). In other words, after S902 is performed again, the first resource excluded in S903 no longer takes effect (as shown in a procedure indicated by bold lines in FIG. 9).

Specifically, the ratio of the remaining resource in the resource selection window to the total resource in the resource selection window is less than max(Xi). It may be understood that one piece of data i (parameter set i) exists, and a ratio of a remaining resource in the resource selection window to the total resource in the resource selection window is less than Xi corresponding to the data i.

It may be understood that, in this step, it may be considered that if a ratio of a remaining resource in the resource selection window to the total resource in the resource selection window is less than Xi, the terminal device considers that this step is invalid, and directly uses the initial available resource set determined in S902 to perform the following steps.

Xi is related to $prio_{TX,i}$. Specifically, Xi is configured by using a resource pool configuration, for example, X=20%, X=30%, or X=50%.

After performing S903, if a ratio of a remaining resource in the resource selection window to the total resource in the resource selection window is greater than or equal to max(Xi), the terminal device continues to perform the following steps.

Specifically, the ratio of the remaining resource in the resource selection window to the total resource in the resource selection window is greater than or equal to max(Xi). It may be understood that for any data i (parameter set i), a ratio of a remaining resource in the resource selection window to the total resource in the resource selection window is greater than or equal to Xi corresponding to the data i.

It may be understood that this step may also be described as follows: After the third resource is excluded from an initial available resource set corresponding to each of the N pieces of data, a remaining resource $S_{A,i}$ and the total resource in the resource selection window are separately compared with a threshold of corresponding data.

S904: The terminal device separately excludes, from $S_A^{Initial}$ based on second SCI, a fourth resource i corresponding to each parameter set, where the fourth resource i is a reserved resource in the second SCI, a reference signal received power RSRP of the second SCI is greater than an RSRP threshold $Th_{RSRP,i}$, and the reserved resource in the second SCI is located in a time unit in the resource selection window.

For this step, refer to the foregoing descriptions in step 6 of the resource sensing process of the sidelink SL.

The terminal device successfully decodes the second SCI in a slot in a sensing window, and a resource reservation period field in the second SCI indicates a periodic resource. The periodic resource is a resource reserved by another terminal device or a retransmission resource indicated by another terminal device.

It may be understood that in embodiments of this application, the second SCI may be first-stage SCI, second-stage SCI, or first-stage SCI and second-stage SCI. This is not limited in this application.

When a resource in the periodic resource is located in the resource selection window, and the reference signal received power RSRP of the first SCI is greater than the RSRP threshold $Th_{RSRP,i}$, the resource that is in the selection window and that is in the periodic resource is excluded. In other words, the fourth resource i includes the resource that is in the selection window and that is in the periodic resource.

Specifically, the reference signal may be a demodulation reference signal DMRS.

In this step, the RSRP may be an RSRP obtained by measuring a demodulation reference signal (Demodulation Reference Signal, DMRS for short) on a physical layer sidelink shared channel (Physical Sidelink Shared Channel, PSSCH for short) scheduled by using the first SCI, and/or an RSRP obtained by measuring a DMRS on a PSCCH that carries the first SCI. This is not limited in this application.

Specifically, for $Th_{RSRP,i}$, refer to the foregoing descriptions in step 3 of the resource sensing process of the sidelink SL.

It may be understood that $Th_{RSRP,i}$ corresponds to data i (parameter set i) in the N pieces of data.

For example, $Th_{RSRP,i}$ corresponding to the data i in the N pieces of data may be determined based on $prio_{TX,i}$ and a priority $prio_{RX}$ indicated in the second SCI. $Th_{RSRP,i}$ is specifically a $(prio_{RX}+(prio_{TX,i}-1)*8)^{th}$ threshold in an RSRP threshold set configured by using the resource pool.

Optionally, if there are a plurality of pieces of first SCI, priorities $prio_{RX}$ indicated in all pieces of SCI may be the same or may be different. In this case, $prio_{RX}$ used to determine $Th_{RSRP}$ corresponding to the N pieces of data may be a maximum value of $prio_{RX}$ indicated in all pieces of SCI, that is, $prio_{RX}$ with a lowest priority; may be a minimum value of $prio_{RX}$ indicated in all pieces of SCI, that is, $prio_{RX}$ with a highest priority; or may be another configured priority. This is not limited in this application.

For ease of description, step S904 is referred to as step f.

S905: After performing S904, if a ratio of a remaining resource i ($S_{A,i}$) that is in the resource selection window and that corresponds to the data i to the total resource in the resource selection window is less than Xi, for the data i, the terminal device increases $Th_{RSRP,i}$ by a specific step size, and then performs S904 again, until ratios of remaining resources i ($S_{A,i}$) that are in the resource selection window and that correspond to all pieces of data i to the total resource in the resource selection window are greater than or equal to Xi. For example, the N pieces of data include data 1, data 2, and data 3, and the data 1, the data 2, and the data 3 respectively correspond to thresholds X1=20%, X2=30%, and X3=40%. In this case, it is required that $S_{A,1}$ corresponding to the data 1/the total resource in the resource selection window be greater than or equal to 20%, $S_{A,2}$ corresponding to the data 2/the total resource in the resource selection window be greater than or equal to 30%, and $S_{A,3}$ corresponding to the data 3/the total resource in the resource selection window be greater than or equal to 40%. After step S904 is performed, if $S_{A,1}$ corresponding to the data 1/the total resource in the resource selection window is less than 20%, $S_{A,2}$ corresponding to the data 2/the total resource in the resource selection window is greater than or equal to 30%, and $S_{A,3}$ corresponding to the data 3/the total resource in the resource selection window is greater than or equal to 40%, $Th_{RSRP,1}$ corresponding to the data 1 is increased, then step S904 is performed, and whether $S_{A,1}$/the total resource in the resource selection window is less than 20% is checked. If $S_{A,1}$/the total resource in the resource selection window is less than 20%, S906 is further performed.

It may be understood that, this step may also be described as follows: If a ratio of $S_{A,i}$ corresponding to any data i to the total resource in the resource selection window is less than Xi, for the data i, the terminal device increases $Th_{RSRP,i}$ by a specific step size, and performs S904 again.

It may be understood that, this step may also be described as follows: If a ratio of $S_{A,i}$ corresponding to specific data i to the total resource in the resource selection window is less than Xi, for the data i, the terminal device increases $Th_{RSRP,i}$ by a specific step size, and performs S904 again.

Specifically, the step size may be 3 dB, or may be another value. This is not limited in this application. The step size may be in a protocol, or may be configured by using a higher layer. This is not limited in this application.

It may be understood that, for a meaning of Xi in this step, refer to step S903a.

It may be understood that, in a same slot in the sensing window, only one of S903 and S904 is performed. For example, in S903, because the terminal device is sending data but does not perform channel sensing, the terminal device does not receive the second SCI, and thus does not perform S904. Similarly, if the terminal device receives the second SCI, it indicates that the terminal device performs channel sensing in the slot.

S906: The terminal device determines that $S_A = S_A^{\text{initial}} - U_{i=0}^{N-1}\left(S_A^{\text{initial}} - S_{A,i}\right) = \bigcap_{i=0}^{N-1} S_{A,i}$. $\cup$ is taking a union set. $S_{A,i}$ is a set of remaining resources corresponding to the data i (parameter set i).

It may be understood that, in the implementation of determining $S_A$ shown in FIG. 9, when the threshold is used for comparison in each step, "less than" may be replaced with "less than or equal to", and correspondingly, "greater than or equal to" may be replaced with "greater than". This is not limited in embodiments of this application.

In the implementation of determining $S_A$ shown in FIG. 9, the N pieces of data are used as a whole, the initial available resource set is determined by using a same parameter, and the first resource is also excluded by using a same parameter. However, when a ratio of a remaining resource to the total resource in the resource selection window is compared with the threshold, a threshold corresponding to each piece of data (parameter set) is used as the threshold. In addition to the effects of the implementation shown in FIG. 8, a specific degree of flexibility can be further implemented.

It may be understood that, in the foregoing implementation of determining $S_A$ shown in FIG. 9, parameters related to determining the sensing window and the selection window are combined, and other parameters are not combined or one or more of other parameters are combined. A same initial available resource set may be used to reduce complexity. In addition, a parameter that is not combined may be flexibly selected as required, to improve accuracy of resource exclusion.

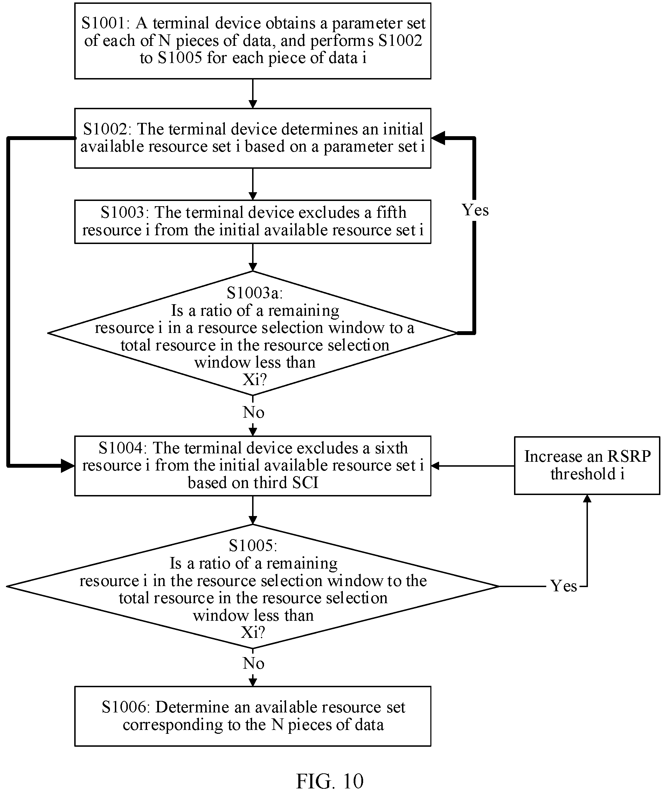

With reference to FIG. 10, the following describes in detail still another implementation of the process of determining $S_A$ in step S702.

For S1001 to S1005 in the implementation shown in FIG. 10, refer to the conventional technology or the foregoing descriptions about the resource sensing process of the sidelink SL. In other words, a terminal device first determines, for each of N pieces of data, an available resource set corresponding to the data, and then takes an intersection set of resource sets corresponding to all of the N pieces of data as an available resource set corresponding to the N pieces of data.

Specifically, the implementation includes the following steps.

S1001: The terminal device obtains a parameter set of each of the N pieces of data, and performs S1002 to S1005 for each piece of data i.

S1002: The terminal device determines, based on a parameter set i, an initial available resource set i corresponding to the data i.

S1003: The terminal device excludes a fifth resource i from the initial available resource set i.

The fifth resource i is a fifth resource corresponding to the data i. For a meaning of the fifth resource, refer to the meaning of the first resource or the third resource. A difference between the fifth resource and the first resource or the third resource lies in that the fifth resource is for each piece of data.

S1003a: If a ratio of a remaining resource i ($S_{A,i}$) in a resource selection window to a total resource in the resource selection window is less than Xi, perform S1002 again. Then, the following steps are performed (in other words, after S1002 is performed again, S1003 and S1003a are not performed again). In other words, after S1002 is performed again, the fifth resource excluded in S1003 no longer takes effect (as shown in a procedure indicated by bold lines in FIG. 10).

For a meaning of Xi, refer to the foregoing descriptions.

S1004: The terminal device excludes a sixth resource i from the initial available resource set i based on third SCI.

For a meaning of the third SCI, refer to the meaning of the second SCI.

The sixth resource i is a sixth resource corresponding to the data i. For a meaning of the sixth resource, refer to the meaning of the fourth resource.

For S1005, refer to 905.

S1006: The terminal device determines that $S_A = \bigcap_{i=0}^{N-1} S_{A,i}^{\text{initial}} - U_{i=0}^{N-1}\left(S_{A,i}^{\text{initial}} - S_{A,i}\right)$. $\cup$ is taking a union set. $S_{A,i}^{\text{initial}}$ is the initial available resource set corresponding to the data i (parameter set i). $S_{A,i}$ is a set of remaining resources corresponding to the data i (parameter set i).

Optionally, it may alternatively be set that $S_{A,i}^{\text{initial}}$ corresponding to each piece of data i is the same, and is $S_A^{\text{initial}}$. In this case, $S_A = S_A^{\text{initial}} - U_{i=0}^{N-1}\left(S_A^{\text{initial}} - S_{A,i}\right) = \bigcap_{i=0}^{N-1} S_{A,i}$.

In the implementation of determining $S_A$ shown in FIG. 10, an available resource set i corresponding to each piece of data i is first obtained, and then each available resource set i is processed to obtain the available resource set $S_A$

corresponding to the N pieces of data. In addition to achieving effects of the implementation shown in FIG. 8, the conventional technology is reused as much as possible to reduce complexity.

It may be understood that, in the implementation of determining $S_A$ shown in FIG. 10, after determining the available resource set i corresponding to each piece of data i, the terminal device may directly report each available resource set i to a MAC layer, and the MAC layer selects a resource. In other words, S 1006 may not be performed, or may not be performed at a PHY layer.

In addition, in an LBT-based mode 2 resource assignment manner, a first terminal device may reserve, by using first-stage SCI, a resource used for transmission, and a second terminal device may sense and decode the first-stage SCI in a sensing window, to determine a location of the resource reserved by the first terminal device, for example, a slot. To implement COT sharing between the second terminal device and the first terminal device, the second terminal device may send COT sharing indication information to the first terminal device, to authorize the first terminal device to set that COT preempted by the second terminal device is used at an indicated location (for example, a slot).

One or more of the following parameters are considered for implementing the COT sharing between the second terminal device and the first terminal device: a priority of to-be-transmitted data and/or a CAPC. Specifically, the second terminal device determines, by sensing a priority of to-be-transmitted data of the first terminal device and/or a CAPC, whether a resource in the COT is able to be shared with the first terminal device. For example, when a priority of data transmitted by the first terminal device is higher than a priority of data transmitted by the second terminal device, and/or when a CAPC of the first terminal device is higher than a CAPC of the second terminal device, the second terminal device determines to share a part of or all resources in the COT with the first terminal device.

The priority of the data transmitted by the first terminal device may be a highest priority in priorities of a plurality of pieces of data (TBs), that is, $prio_{RX} = max(prio_{RX,i})$, or the priority of the data transmitted by the first terminal device is a COT sharing priority indicated by the first terminal device. The priority of the data transmitted by the second terminal device may be a highest priority in priorities of a plurality of pieces of data (TBs), that is, $prio_{TX} = max(prio_{TX,i})$, or the priority of the data transmitted by the first terminal device is a COT sharing priority configured by the first terminal device. An embodiment of this application further provides a COT sharing method, an apparatus, and a system. A same available resource set may be determined for a plurality of pieces of data (including data of a terminal device and data sent in shared COT), and continuous slot resources are further selected for the plurality of pieces of data in the set, so that data can be sent on continuous resources in $S_A$, a risk that a resource is preempted by another terminal device is reduced, and a probability of continuously sending data is improved. In addition, data transmission performance is finally improved.

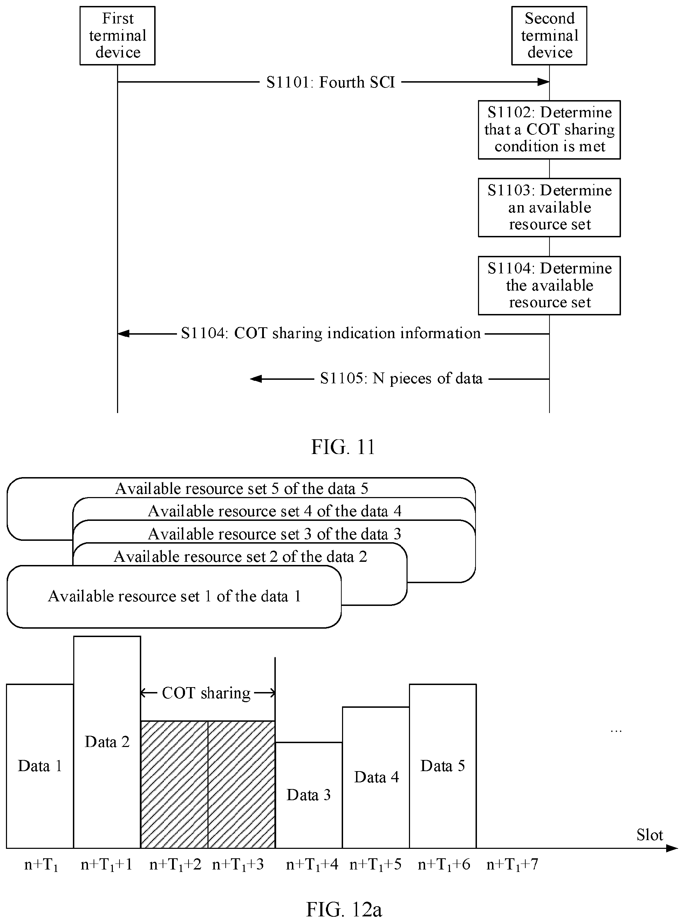

As shown in FIG. 11, this embodiment of this application specifically includes the following steps.

S1101: A first terminal device sends fourth SCI, where the fourth SCI carries information about a reserved resource, and information about a data priority and/or information about a CAPC. Correspondingly, a second terminal device receives the SCI.

In embodiments of this application, the fourth SCI may be first-stage SCI, second-stage SCI, or first-stage SCI and second-stage SCI. This is not limited in this application.

S1102: The second terminal device determines, based on sensed fourth SCI of the first terminal device that is sensed, that the data priority and/or the CAPC of the first terminal device meet/meets a COT sharing condition, in other words, a priority of data transmitted by the first terminal device is higher than a priority of data transmitted by the second terminal device, and/or the CAPC of the first terminal device is higher than a CAPC of the second terminal device.

Specifically, the CAPC of the second terminal device is a CAPC used in a process of performing type 1 channel access by the second terminal device, that is, a CAPC used in a process of performing cat 4 LBT.

Specifically, the priority of the data transmitted by the first terminal device may be a highest priority in priorities of a plurality of pieces of data (TBs), that is, $prio_{RX} = max(prio_{RX,i})$, the priority of the data transmitted by the first terminal device is a COT sharing priority indicated by the first terminal device, or the priority of the data transmitted by the first terminal device is a priority that is of the data transmitted by the first terminal device and that is configured by the first terminal device. The priority of the data transmitted by the second terminal device may be a highest priority in priorities of a plurality of pieces of data (TBs), that is, $prio_{TX} = max(prio_{TX,i})$, the priority of the data transmitted by the second terminal device is a COT sharing priority configured by the second terminal device, or the priority of the data transmitted by the second terminal device is a priority that is of the data transmitted by the second terminal device and that is configured by the second terminal device.

The resource reserved by the first terminal device is located in a resource selection window of the second terminal device.

This step is optional.

S1103: The second terminal device determines an available resource set $S_A$. For a specific determining method, refer to the conventional technology or the foregoing methods (for example, the methods shown in FIG. 7 to FIG. 10) in embodiments of this application. This is not limited in this embodiment of this application.

It may be understood that, in an implementation, the determining $S_A$ includes determining one $S_{A,i}$ for each piece of data i of N pieces of data. In other words, N available resource sets are determined, and each available resource set corresponds to one of the N pieces of data, as described above. Further, the second terminal device determines a resource (set) that is reserved by the first terminal device in $S_{A,i}$ of each piece of data i of the N pieces of data and that is able to be shared, where the resource (set) is denoted as $S_{A,i}^{shared}$, and is also referred to as a shared resource set i in this embodiment of this application.

Further, optionally, the second terminal device reports, to a MAC layer, $S_{A,i}$ of each piece of data i of the N pieces of data and corresponding $S_{A,i}^{shared}$.

It may be understood that, in another implementation, the determining $S_A$ includes determining one $S_A$ for N pieces of data, as described above. Further, the second terminal device determines a resource (set) that is reserved by the first terminal device in $S_A$ and that is able to be shared, where the resource (set) is denoted as $S_A^{shared}$, and is also referred to as a shared resource set in this embodiment of this application.

Further, optionally, the second terminal device reports, to a MAC layer, the determined available resource set $S_A$ and the resource ($S_A^{shared}$, or referred to as the shared resource set) that is reserved by the first terminal device and that is able to be shared.

S1104: The second terminal device sends COT sharing indication information to the first terminal device, to indicate the resource that is able to be shared.

A specific time gap exists between a slot for sending the COT sharing indication information and a to-be-shared slot, to ensure that the first terminal device has abundant processing time.

Specifically, the COT sharing indication information may be carried in first-stage SCI, second-stage SCI, or a MAC CE, or may be carried in a combination of at least two pieces of information. This is not limited in this application.

S1105: The second terminal device sends the N pieces of data on at least one resource in $S_A$.

It may be understood that, as described in step S1103, in an implementation, $S_A$ includes $S_{A,i}$ corresponding to each piece of data i of the N pieces of data. Correspondingly, that the second terminal device sends the N pieces of data includes that the second terminal device sends the data i on at least one resource in $S_{A,i}$.

It may be understood that, as described in step S1103, in another implementation, $S_A$ includes one $S_A$ corresponding to the N pieces of data. Correspondingly, the second terminal device sends the N pieces of data on the at least one resource in $S_A$.

In this embodiment, N may be a positive integer.

The MAC layer may select continuous resources for sharing with the first device and sending the N pieces of data. For a specific selection manner, refer to the foregoing descriptions.

Regardless of using a specific implementation described in S1103 for determining $S_A$, the at least one resource for sending the N pieces of data and the resource shared with the first terminal device may be continuous resources in time domain, that is, continuous slots.

Specifically, for a first implementation, as shown in FIG. 12a, it is assumed that N=5, in other words, five pieces of data exist. After the foregoing steps, it is determined that an available resource set 1 of data 1 includes a slot $n+T_1$ to a slot $n+T_1+4$, an available resource set 2 of data 2 includes the slot $n+T_1+1$ to a slot $n+T_1+5$, an available resource set 3 of data 3 includes the slot $n+T_1+1$ to a slot $n+T_1+6$, an available resource set 4 of data 4 includes the slot $n+T_1+1$ to the slot $n+T_1+6$, and an available resource set 6 of data 5 includes the slot $n+T_1$ to the slot $n+T_1+6$. If the resource reserved by the first terminal device is a resource in the slots $n+T_1+2$ and $n+T_1+3$, the second terminal device determines that the slots $n+T_1+2$ and $n+T_1+3$ may be shared with the first terminal device. In this case, as shown in FIG. 12a, the second terminal device ensures, as much as possible, that the slots occupied for transmission of the data 1 to the data 5 and the slots shared with the first terminal device are logically or physically continuous slots, to reduce a probability that a slot is preempted by another terminal device.

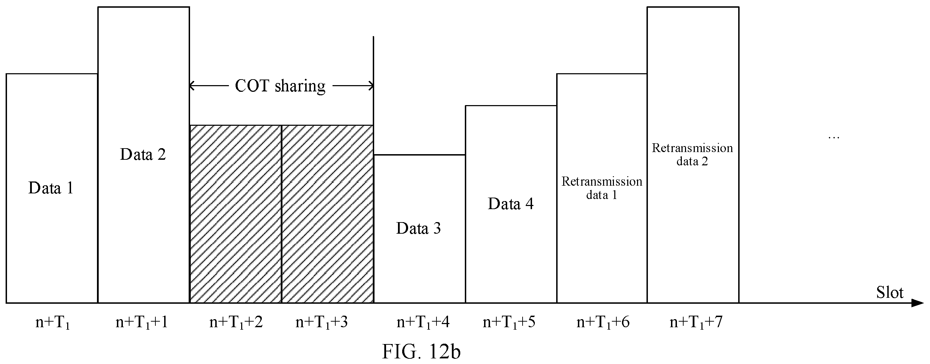

Specifically, for a second implementation, as shown in FIG. 12b, it is assumed that N=4, in other words, the second terminal device has four pieces of data to be sent. The resource selection window of the second terminal device starts from a slot $n+T_1$, and the determined available resource set includes slots $n+T_1$, $n+T_1+1$, ..., $n+T_1+7$, and so on. If the resource reserved by the first terminal device is a resource in the slots $n+T_1+2$ and $n+T_1+3$, the second terminal device determines that the slots $n+T_1+2$ and $n+T_1+3$ may be shared with the first terminal device, and notifies the first terminal device of the shared slots by using the SCI. In this case, as shown in FIG. 12b, the second terminal device ensures, as much as possible, that the slots occupied for transmission and retransmission of data 1 to data 4 and the slots shared with the first terminal device are logically or physically continuous slots, to reduce a probability that a slot is preempted by another terminal device.

It may be understood that when N=1, the second terminal device ensures, as much as possible, that a slot occupied for transmission and retransmission of data 1 and a slot shared with the first terminal device are logically or physically continuous slots, to reduce a probability that a slot is preempted by another terminal device.

Optionally, in this embodiment of this application, the second terminal device obtains M pieces of data, where M is an integer greater than or equal to N.

In an optional implementation, that the second terminal device determines $S_A$ includes determining one $S_{A,i}$ for each piece of data i of the M pieces of data. For a specific manner, refer to the foregoing descriptions of determining one $S_{A,i}$ for each piece of data i of the N pieces of data. Details are not described again.

Further, optionally, the second terminal device determines a resource (set) $S_{A,i}^{shared}$ that is reserved by the first terminal device in $S_{A,i}$ of each piece of data i of the M pieces of data and that is able to be shared. For a specific manner, refer to the foregoing descriptions.

Further, optionally, the second terminal device reports, to the MAC layer, $S_{A,i}$ of each piece of data i of the M pieces of data and corresponding $S_{A,i}^{shared}$. For a specific manner, refer to the foregoing descriptions.

In another optional implementation, that the second terminal device determines $S_A$ includes determining one $S_A$ for the M pieces of data. For a specific manner, refer to the foregoing descriptions.

Further, optionally, the second terminal device determines a resource (set) $S_A^{shared}$ that is reserved by the first terminal device in $S_A$ of the M pieces of data and that is able to be shared. For a specific manner, refer to the foregoing descriptions.

Further, optionally, the second terminal device reports, to the MAC layer, $S_A$ of the M pieces of data and corresponding $S_A^{shared}$. For a specific manner, refer to the foregoing descriptions.

Optionally, in embodiments of this application, the first terminal device may include a plurality of terminal devices.

In an optional implementation, the second terminal device determines that $S_A$ includes a resource (set) $S_{A,i,k}^{shared}$ that is reserved by a terminal device k in the first terminal device in $S_{A,i}$ of each piece of data i of the M pieces of data and that is able to be shared. $S_{A,i,k}^{shared}$ is a resource (set) that is reserved by the terminal device k corresponding to $S_{A,i}$ of each piece of data, and that meets the COT sharing condition. Optionally, the COT sharing condition is that a priority and/or a CAPC that is of reserved data and that is in the fourth SCI of the first terminal device is higher than a data priority of the data i and/or a CAPC, where k is an integer greater than or equal to 0. Alternatively, for the COT sharing condition, refer to an implementation of the second terminal device. The COT sharing condition is not limited in this application.

Specifically, as shown in FIG. 12c-1 and FIG. 12c-2, it is assumed that M=3, in other words, the second terminal device has three pieces of data. After the foregoing steps, it is determined that an available resource set $S_{A,0}$ of data 0 includes a slot $n+T_1$ to a slot $n+T_1+8$, an available resource set $S_{A,1}$ of data 1 includes the slot $n+T_1$ to the slot $n+T_1+3$ and the slot $n+T_1+5$ to the slot $n+T_1+7$, and an available resource set $S_{A,2}$ of data 2 includes the slot $n+T_1$, the slot $n+T_1+5$, and the slot $n+T_1+6$. If a resource reserved by a terminal device 0 in the first terminal device is a resource in the slot $n+T_1+2$, and a resource reserved by a terminal device 1 in the first terminal device is a resource in the slot $n+T_1+3$, the second terminal device determines that the slots $n+T_1+2$ and $n+T_1+3$ may be shared with the terminal device 0 and the terminal device 1 in the first terminal device. In this case, as shown in FIG. 12c-1 and FIG. 12c-2, the second terminal device ensures, as much as possible, that the slots occupied for transmission of the data 0 and the data 1 and the slots shared with the first terminal device are logically or physically continuous slots, to reduce a probability that a slot is preempted by another terminal device. In this case, N=2, in other words, the second terminal device sends the data 0 and the data 1.

Further, optionally, the second terminal device reports, to the MAC layer, $S_{A,i}$ of each piece of data i of the M pieces of data and corresponding $S_{A,i,k}^{shared}$. For a specific manner, refer to the foregoing descriptions.

Specifically, the reporting $S_{A,i,k}^{shared}$ to the MAC layer includes: reporting information about a time-frequency resource reserved by the terminal device k corresponding to the data i, and reporting a priority, a CAPC, a source identifier (source ID), a destination identifier (destination ID), and HARQ feedback-related information that are of data reserved by the terminal device k corresponding to $S_{A,i,k}^{shared}$.

The HARQ feedback-related information includes one or more of the following: a HARQ process number (process number), a new data indicator (New data indicator), a redundancy version (Redundancy version), a HARQ feedback enabled/disabled indicator feedback enabled/disabled indicator, a unicast/multicast broadcast type indicator (Cast type indicator), a channel state information request (CSI request), a zone identifier (Zone ID), and a communication range requirement (Communication range requirement).

In another optional implementation, the second terminal device determines that $S_A$ includes a resource (set)

$S_{A,k}^{shared}$ that is reserved by a terminal device k in the first terminal device in $S_A$ and that is able to be shared. $S_{A,k}^{shared}$ is a resource (set) that is reserved by the terminal device k corresponding to $S_A$, and that meets the COT sharing condition. Optionally, the COT sharing condition is that a priority and/or a CAPC that is of reserved data and that is in the fourth SCI of the first terminal device is higher than a data priority of the data i and/or a CAPC, where k is an integer greater than or equal to 0. Alternatively, for the COT sharing condition, refer to an implementation of the second terminal device. The COT sharing condition is not limited in this application.

Specifically, as shown in FIG. 12d, it is assumed that M=3, in other words, three pieces of data exist. After the foregoing steps, it is determined that the available resource set $S_A$ of the second terminal device includes a slot $n+T_1$ to a slot $n+T_1+8$. If a resource reserved by a terminal device 0 in the first terminal device is a resource in the slot $n+T_1+2$, and a resource reserved by a terminal device 1 in the first terminal device is a resource in the slot $n+T_1+3$, the second terminal device determines that the slots $n+T_1+2$ and $n+T_1+3$ may be shared with the terminal device 0 and the terminal device 1 in the first terminal device. In this case, as shown in FIG. 12d, the second terminal device ensures, as much as possible, that the slots occupied for transmission of the data 0 and the data 1 and the slots shared with the first terminal device are logically or physically continuous slots, to reduce a probability that a slot is preempted by another terminal device.

Further, optionally, the second terminal device reports, to the MAC layer, $S_A$ and corresponding $S_{A,k}^{shared}$. For a specific manner, refer to the foregoing descriptions.

Specifically, the reporting $S_{A,k}^{shared}$ to the MAC layer includes: reporting information about a time-frequency resource reserved by the terminal device k corresponding to $S_A$, and reporting a priority, a CAPC, a source identifier (source ID), a destination identifier (destination ID), and HARQ feedback-related information that are of data reserved by the terminal device k corresponding to $S_{A,k}^{shared}$.

In embodiments of this application, the MAC layer of the second terminal device selects a resource, to select the foregoing at least one resource to send the N pieces of data.

Specifically, how the MAC layer selects the foregoing at least one resource is up to a MAC layer implementation. In a possible manner, in one piece of COT, a new transmission (initial transmission) resource of the N pieces of data is first selected to perform transmission of the N pieces of data, and then a retransmission resource is selected to perform transmission of one or more of the N pieces of data. Alternatively, all resources in one piece of COT are new transmission resources, and are used to perform transmission of the N pieces of data. Alternatively, all resources in one piece of COT are retransmission resources. This is not limited in this application. It may be understood that, when all resources in one piece of COT are retransmission resources, the COT is used to perform transmission of data that has been transmitted for one or more times in one or more pieces of COT before the COT and that is in the N pieces of data.

In an optional implementation, before the second terminal device sends the COT sharing indication information to the first terminal device (S1104), the method further includes: The MAC layer of the second terminal device performs COT sharing based on $S_{A,i}$ reported by a PHY layer, and $S_{A,i,k}^{shared}$ and corresponding information that are reported by the PHY layer. This specifically includes: The MAC layer shares, in COT, a resource that is in $S_{A,i,k}^{shared}$ and that is reserved for data that has a higher data priority than the data i. The shared resource needs to meet a CAPC that is reported from the PHY layer and whose value is less than or equal to that of data i with a minimum CAPC value in the COT.

Specifically, as shown in FIG. 12c-1 and FIG. 12c-2, it is assumed that M=3, in other words, the second terminal device has three pieces of data. After the foregoing steps, it is determined that for data 0, a priority is 1, a CAPC is 2, and the available resource set $S_{A,0}$ includes the slot $n+T_1$ to the slot $n+T_1+8$; for data 1, a priority is 2, a CAPC is 2, the available resource set $S_{A,1}$ includes the slot $n+T_1$ to the slot $n+T_1+3$ and the slot $n+T_1+5$ to the slot $n+T_1+7$; and for data 3, a priority is 3, a CAPC is 3, and the available resource set $S_{A,2}$ includes the slot $n+T_1$, the slot $n+T_1+5$, and the slot $n+T_1+6$. If a resource reserved by the terminal device 0 in the first terminal device is a resource in the slot $n+T_1+2$, a data priority is 2, and a CAPC is 1; and a resource reserved by the terminal device 1 in the first terminal device is a resource in the slot $n+T_1+3$, a data priority is 1, and a CAPC is 1, because the data priority of the data 2 is lower than a data priority of the resource reserved by the first terminal device, and a CAPC of the resource reserved by the first terminal device is less than the CAPCs for the data 1 and the data 2, the second terminal device determines that the slots $n+T_1+2$ and $n+T_1+3$ may be shared with the terminal device 0 and the terminal device 1 in the first terminal device. In this case, as shown in FIG. 12c-1 and FIG. 12c-2, the second terminal device ensures, as much as possible, that the slots occupied for transmission of the data 0 and the data 1 and the slots shared with the first terminal device are logically or physically continuous slots, to reduce a probability that a slot is preempted by another terminal device.

Specifically, that the MAC layer of the second terminal device performs the COT sharing based on $S_{A,i}$ reported by the PHY layer, and $S_{A,i,k}^{shared}$ and corresponding information that are reported by the PHY layer includes: when $S_{A,i,k}^{shared}$ and $S_{A,i,j}^{shared}$ meet a sharing condition and time-frequency resources overlap, if data priorities of data of the first terminal device are different, the MAC layer may share, in COT, a resource reserved for data with a high data priority; or if data priorities of data of the first terminal device are the same, the MAC layer randomly selects, in COT for sharing, a resource reserved for data, where j is a terminal device j in the first terminal device, and j is an integer greater than or equal to 0.

Further, optionally, that the MAC layer of the second terminal device performs resource preemption based on $S_{A,i}$ reported by the PHY layer, and $S_{A,i,k}^{shared}$ and corresponding information that are reported by the PHY layer includes: The MAC layer preempts, by using data of a high data priority of the second terminal device, a resource that is reserved for data of a low data priority of the first terminal device and that is in the resource (set) $S_{A,i,k}^{shared}$ that is able to be shared. In this case, it may be understood that the second terminal device finally does not share a part of or all resources in $S_{A,i,k}^{shared}$.

In another optional implementation, before the second terminal device sends the COT sharing indication information to the first terminal device (S1104), the method includes: The MAC layer of the second terminal device performs COT sharing based on $S_A$ reported by a PHY layer, and $S_{A,k}^{shared}$ and corresponding information that are reported by the PHY layer. This specifically includes: The MAC layer shares, in COT, a resource that is in $S_{A,k}^{shared}$ and that is reserved for data that has a higher data priority than the data i. The shared resource needs to meet a CAPC that is reported from the PHY layer and whose value is less than or equal to that of data i with a minimum CAPC value in the COT.

Specifically, before the second terminal device sends the COT sharing indication information to the first terminal device (S1104), that the MAC layer of the second terminal device performs COT sharing based on $S_A$ reported by a PHY layer, and $S_{A,k}^{shared}$ and corresponding information that are reported by the PHY layer includes: when $S_{A,k}^{shared}$ and $S_{A,j}^{shared}$ meet a sharing condition and time-frequency resources overlap, if data priorities of data in a plurality of terminal devices for reserving a resource are different, the MAC layer may share, in COT, a resource reserved for data with a high data priority; or if data priorities of data in a plurality of terminal devices for reserving a resource are the same, the MAC layer randomly selects, in COT for sharing, a resource reserved for data, where j is a terminal device j in the first terminal device, and j is an integer greater than or equal to 0.

Further, optionally, that the MAC layer of the second terminal device performs resource preemption based on $S_A$ reported by the PHY layer, and $S_{A,k}^{shared}$ and corresponding information that are reported by the PHY layer includes: The MAC layer preempts, by using data of a high data priority, a resource that is reserved for data of a low data priority and that is in the resource (set) $S_{A,k}^{shared}$ that is able to be shared. In this case, it may be understood that the second terminal device finally does not share a part of or all resources in $S_{A,k}^{shared}$.

Further, after selecting the resource, the second terminal device notifies another terminal device of reservation information (for example, the data i) of the resource by using SCI; and notifies another terminal device of information about the shared resource (for example, a resource shared with the first terminal device) (that is, step S1104), including a source identifier (source ID), a destination identifier (destination ID), and a time-frequency resource position.

Optionally, in this embodiment of this application, mode 2 continuous transmission and COT sharing may be supported and configured by using signaling. The signaling may include higher layer signaling such as RRC signaling or MAC layer signaling, or may include physical layer signaling such as DCI, or may be a combination of higher layer signaling and physical layer signaling. This is not limited in this application.

Steps S1102 and S1103 may be implemented by the processing unit 402 of the communication apparatus 400, or may be implemented by the processor 502 of the communication apparatus 500.

Steps S1101, S1104, and S1105 may be implemented by controlling the communication unit 403 by the processing unit 402 of the communication apparatus 400, or may be implemented by controlling the transceiver 503 by the processor 502 of the communication apparatus 500.

It may be understood that the steps in this embodiment of this application are not necessarily performed in a sequence of numbers, provided that corresponding functions can be logically completed and implemented. This is not limited in this application.

Optionally, in this embodiment of this application, after determining the available resource set and before sending the N pieces of data, the terminal device may perform resource reselection and preemption again. For a specific implementation, refer to the foregoing descriptions.

In addition, currently, for an unlicensed band, each country or region has a specific requirement on an occupied channel bandwidth (occupied channel bandwidth, OCB) corresponding to a channel, and it is generally specified that the OCB is at least 80% of a normal bandwidth. For example, if a channel bandwidth is 20 MHz, for occupying the 20 MHz channel, the terminal device needs to occupy at least a bandwidth of 16 MHz. Therefore, to ensure the OCB requirement, a concept of an interlaced resource block (interlaced resource block, interlaced RB) is introduced in a new radio (new radio, NR) system, and the following is defined: an interlace (interlace) resource m (also referred to as a resource in an interlace m) includes $\{m, M+m, 2M+m, 3M+m, ...\}$ RBs, where $m \in \{0, 1, ..., M-1\}$. As shown in FIG. 13, it is assumed that M = 10. A channel whose bandwidth is 20 MHz and whose subcarrier spacing (subcarrier spacing, SCS) is 15 kHz includes 10 interlace (an interlace 0 to an interlace 9) resources, and a terminal device 1 may use a resource in the interlace 0 (interlace 0), that is, $m = 0$, where the resource includes 10 interlaced RBs such as {RB 0, RB 10, ..., RB 90}; a terminal device 2 may use a resource in the interlace 1 (interlace 1), that is, $m = 1$, where the resource includes 10 interlaced RBs such as {RB 1, RB 11, ..., RB 91}; and a status of another terminal device for using an interlaced resource may be deduced by analogy. In embodiments of this application, the interlace and the sub-channel may be interchangeably used.

Optionally, after a terminal device performs LBT on a channel, to avoid interference of different channels, the terminal device does not send data on an entire channel bandwidth that is occupied, but reserves a part of a frequency domain resource as a guard bandwidth (guard band), and sends data on a remaining frequency domain resource. An available resource used to send data may be referred to as a resource block set (RB set). It may be understood that an RB 0 to an RB 99 shown in FIG. 13 are an RB set.

It should be noted that in embodiments of this application, the channel and the RB set may be interchangeably used.

After performing LBT on a channel, a terminal device (referred to as the terminal device 1) performs data transmission in COT. One piece of COT may include a plurality of slots. The terminal device 1 may perform data transmission in the plurality of slots included in the COT. Alternatively, a part of slots in the COT may be shared with another terminal device (referred to as the terminal device 2) for data transmission.

When the terminal device 1 shares a part of slots in the COT with the terminal device 2 for transmission, a period of time (Gap) is reserved in a slot before the shared slot and is not used for data transmission, so that the terminal device 2 performs LBT in the gap, and then use the shared slot for data transmission. A length of the gap may be one OFDM symbol or 25 μs. This is not limited in this application.

When performing continuous data transmission in the plurality of slots included in the COT, the terminal device 1 may perform data transmission in the total slots without reserving a gap.

However, when the terminal device 1 performs continuous data transmission in the plurality of slots included in the COT on a channel (RB set) in an interlaced RB manner, if another terminal device (referred to as the terminal device 2) also performs data transmission on the channel in an interlaced RB manner, where the terminal device 2 is a terminal device whose COT is shared with another terminal device, the continuous data transmission of the terminal device 1 affects the LBT performed by the terminal device 2. In this case, data transmission of the terminal device 2 in the shared COT is affected.

Therefore, an embodiment of this application provides a communication method, an apparatus, and a system. In the communication method, when performing continuous data transmission in a plurality of slots, a terminal device 1 can perform data transmission in a gap only when all frequency domain resources of a channel are occupied. In other words, if the terminal device 1 performs continuous data transmission on a part of channels in an interlace manner, the terminal device 1 needs to reserve a period of time as a gap before each slot ends. In this period, the terminal device 1 cannot perform data transmission. According to the method, impact that is of occupying the plurality of slots by the terminal device 1 to continuously send data and that is on LBT and data transmission of another terminal device that uses a same channel resource (occupying different interlaced RBs in a frequency division manner) can be avoided, thereby improving resource utilization of an entire channel, and improving system performance.

As shown in FIG. 14, the terminal device 1 performs LBT in a slot n-1 (slot n-1), to obtain COT and a slot n to a slot n+2, and performs continuous data transmission in a slot in the COT. At the beginning of each slot, automatic gain control (Automatic Gain Control, AGC) is performed for a period of time, and then information control and data transmission are performed. Shared COT obtained by a terminal device 2 is the slot n+1 and the slot n+2. For example, if the COT is shared with a terminal device 3, the terminal device 2 needs to perform LBT in a period of time before the slot n ends, to perform data transmission in the slot n+1 and the slot n+2.

Assuming that both the terminal device 1 and the terminal device 2 use a channel to perform data transmission in an interlace manner, the terminal device 1 cannot perform data transmission in a period of time (Gap) before the slot n ends, so that the terminal device 2 performs the LBT and obtains the shared COT in this period.

Further, optionally, if performing continuous data transmission in the shared COT, the terminal device 2 cannot perform data transmission in a period of time before the slot n+1 and the slot n+2 end, so that another terminal device performs LBT, and perform data transmission by using a resource in the slot n+2 and a slot after the slot n+2.

Assuming that the terminal device 1 performs data transmission by occupying an entire channel bandwidth, the terminal device may continue to perform data transmission in gap time before the slot n ends (not shown in FIG. 14), to improve data transmission performance of the terminal device 1. Similarly, when performing data transmission in the shared COT by using the entire channel bandwidth, the terminal device 2 may continue to perform data transmission in gap time before the slot n+1 ends (not shown in FIG. 14), to improve data transmission performance of the terminal device 2.

The method may be implemented by controlling the communication unit 403 by the processing unit 402 of the communication apparatus 400, or may be implemented by controlling the transceiver 503 by the processor 502 of the communication apparatus 500.

It should be noted that continuous slots mentioned in this application are logically continuous slots, and may be physically continuous slots or discrete slots. This is not limited in this application.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining an available resource set $S_A$ based on N parameter sets, wherein the $S_A$ is located in a resource selection window, the N parameter sets correspond to N pieces of data, data i corresponds to a parameter set i, N is a positive integer greater than 1, i is an integer greater than or equal to 0 and less than N, and the parameter set i comprises at least one of the following parameters: a sending priority $prio_{TX,i}$, a data delay budget $PDB_i$, a frequency domain resource unit $L_{subCH,i}$, or a channel access priority class $CAPC_i$; and
   sending the N pieces of data on a resource in the $S_A$.

2. The method according to claim 1, wherein the determining an available resource set $S_A$ based on the N parameter sets comprises:

   determining, based on the N parameter sets, a first parameter set corresponding to the data set, wherein the first parameter set comprises at least one of the following: a first sending priority $prio_{TX}$, a first data delay budget $PDB$, a first frequency domain resource unit $L_{subCH}$, or a first channel access priority class $CAPC$, $prio_{TX} = max(prio_{TX,i})$, $PDB = min(PDB_i)$, $L_{subCH} = max(L_{subCH,i})$, $CAPC = max(CAPC_i)$, max() indicates taking a maximum value in N values, and min() indicates taking a minimum value in N values; and
   determining the $S_A$ based on the first parameter set.

3. The method according to claim 2, wherein the determining the $S_A$ based on the first parameter set comprises:

   step a: determining an initial available resource set $S_A^{Initial}$ based on the first parameter set;

and

step b: excluding a first resource from the $S_A^{Initial}$ based on the first parameter set, wherein the first resource is a time unit that is in the resource selection window and that corresponds to a time unit that is not sensed in a sensing window; and/or

step c: excluding a second resource from the $S_A^{Initial}$ based on received first sidelink control information SCI, wherein the second resource is a reserved resource in the first SCI, a reference signal received power RSRP of the first SCI is greater than an RSRP threshold $Th_{RSRP}$, and the reserved resource in the first SCI is located in a time unit in the resource selection window; and

determining the $S_A$ based on at least one of the first resource and the second resource.

4. The method according to claim 3, wherein the method further comprises:

after performing step b, if a ratio of a set of remaining resources to the $S_A^{Initial}$ is less than a first threshold, performing step a again.

5. The method according to claim 3 or 4, wherein the method further comprises:

after performing step c, if a ratio of a set of remaining resources to the $S_A^{Initial}$ is less than the first threshold, increasing the $Th_{RSRP}$ by a first step size, and performing step c again based on increased $Th_{RSRP}$, until a ratio of a set of remaining resources to the $S_A^{Initial}$ is greater than or equal to the first threshold.

6. The method according to any one of claims 3 to 5, wherein the determining the $S_A$ based on at least one of the first resource and the second resource comprises:

determining that $S_A = S_A^{Initial} - first\ resource - second\ resource$.

7. The method according to any one of claims 3 to 6, wherein the method further comprises:
determining the $Th_{RSRP}$, wherein the $Th_{RSRP}$ is determined based on the $prio_{Tx}$ and a priority $prio_{Rx}$ indicated in the first SCI.

8. The method according to claim 2, wherein the determining the $S_A$ based on the first parameter set comprises:

step d: determining $S_A^{Initial}$ based on the first parameter set; and

step e: excluding a third resource from the $S_A^{Initial}$ based on the first parameter set, wherein the third resource is a time unit that is in the resource selection window and that is of a periodic resource corresponding to a time unit that is not sensed in a sensing window; and/or

step f: separately excluding, from the $S_A^{Initial}$ based on second SCI, a fourth resource corresponding to each parameter set, wherein a fourth resource i corresponding to the parameter set i is a reserved resource in the second SCI, an RSRP of the second SCI is greater than $Th_{RSRP,i}$ corresponding to the parameter set i, and the reserved resource in the second SCI is located in a time unit in the resource selection window; and
determining the $S_A$ based on at least one of a third resource corresponding to each parameter set and the fourth resource.

9. The method according to claim 8, wherein the method further comprises:

after performing step e, if a ratio of a set of remaining resources to the $S_A^{Initial}$ is less than a second threshold i corresponding to **any** parameter set i, performing step d again.

10. The method according to claim 8 or 9, wherein the method further comprises:

after performing step f, if a ratio of a set of remaining resources corresponding to any parameter set i to the $S_A^{Initial}$ is less than a second threshold i corresponding to the any parameter set i, increasing the $Th_{RSRP,i}$ by a first step size, and performing step f again based on increased $Th_{RSRP,i}$, until ratios of sets of remaining resources corresponding to all parameter sets to the $S_A^{Initial}$ are greater than or equal to corresponding second thresholds i.

11. The method according to any one of claims 8 to 10, wherein the determining the $S_A$ based on at least one of a third resource corresponding to each parameter set and the fourth resource comprises:

determining that $S_A = S_A^{initial} - U_{i=0}^{N-1}\left(S_A^{initial} - S_{A,i}\right)$, wherein the $S_{A,i}$ is a set of remaining resources corresponding to the parameter set i, and U indicates taking a union set.

12. The method according to any one of claims 8 to 11, wherein the method further comprises:
determining the $Th_{RSRP,i}$, wherein the $Th_{RSRP,i}$ is determined based on the $prio_{TX,i}$ and a priority $prio_{Rx}$ indicated in the first SCI.

13. The method according to claim 1, wherein the determining an available resource set $S_A$ based on the N parameter sets comprises:

determining N initial available resource sets $S_{A,i}^{initial}$ and N available resource sets $S_{A,i}$ based on the N parameter sets respectively; and

determining that $S_A = \cap_{i=0}^{N-1} S_{A,i}^{initial} - U_{i=0}^{N-1}\left(S_{A,i}^{initial} - S_{A,i}\right)$, wherein $\cap$ indicates taking an intersection set, and U indicates taking a union set.

14. The method according to claim 2, wherein the determining an available resource set $S_A$ based on the N parameter sets comprises:

determining N available resource sets $S_{A,i}$ based on the N parameter sets respectively; and
determining the $S_A$ based on the $S_{A,i}$, wherein $S_A = \cap S_{A,i}$, and $\cap$ indicates taking an intersection set.

15. The method according to any one of claims 1 to 14, wherein the sending the N pieces of data on a resource in the $S_A$ comprises: sending the N pieces of data on continuous resources in the $S_A$.

16. A communication apparatus, comprising a processor and a transceiver, wherein

the processor is configured to determine an available resource set $S_A$ based on N parameter sets, wherein the $S_A$ is located in a resource selection window, the N parameter sets correspond to N pieces of data, data i corresponds to a parameter set i, N is a positive integer greater than 1, i is an integer greater than or equal to 0 and less than N, and the parameter set i comprises at least one of the following parameters: a sending priority $prio_{TX,i}$, a data delay budget $PDB_i$, a frequency domain resource unit $L_{subCH,i}$, or a channel access priority class $CAPC_i$; and
the transceiver is configured to send the N pieces of data on a resource in the $S_A$.

17. The communication apparatus according to claim 16, wherein the determining an available resource set $S_A$ based on the N parameter sets comprises:

determining, based on the N parameter sets, a first parameter set corresponding to the data set, wherein the first parameter set comprises at least one of the following: a first sending priority $prio_{TX}$, a first data delay budget $PDB$, a first frequency domain resource unit $L_{subCH}$, or a first channel access priority class $CAPC$, $prio_{TX} = max(prio_{TX,i})$, $PDB = min(PDB_i)$, $L_{subCH} = max(L_{subCH,i})$, $CAPC = max(CAPC_i)$, max() indicates taking a maximum value in N values, and min() indicates taking a minimum value in N values; and
determining the $S_A$ based on the first parameter set.

18. The communication apparatus according to claim 17, wherein the determining the $S_A$ based on the first parameter set comprises:

step a: determining an initial available resource set $S_A^{Initial}$ based on the first parameter set;
and

step b: excluding a first resource from the $S_A^{Initial}$ based on the first parameter set, wherein the first resource is a time unit that is in the resource selection window and that corresponds to a time unit that is not sensed in a sensing window; and/or

step c: excluding a second resource from the $S_A^{Initial}$ based on received first sidelink control information SCI, wherein the second resource is a reserved resource in the first SCI, a reference signal received power RSRP of the first SCI is greater than an RSRP threshold $Th_{RSRP}$, and the reserved resource in the first SCI is located in a time unit in the resource selection window; and
determining the $S_A$ based on at least one of the first resource and the second resource.

19. The communication apparatus according to claim 18, wherein the processor is further configured to:

after performing step b, if a ratio of a set of remaining resources to the $S_A^{Initial}$ is less than a first threshold, perform step a again.

20. The communication apparatus according to claim 18 or 19, wherein the processor is further configured to:

after performing step c, if a ratio of a set of remaining resources to the $S_A^{Initial}$ is less than the first threshold, increase the $Th_{RSRP}$ by a first step size, and perform step c again based on increased $Th_{RSRP}$, until a ratio of a set of remaining resources to the $S_A^{Initial}$ is greater than or equal to the first threshold.

21. The communication apparatus according to any one of claims 18 to 20, wherein the determining the $S_A$ based on at least one of the first resource and the second resource comprises:

determining that $S_A = S_A^{Initial} - first\ resource - second\ resource$.

22. The communication apparatus according to any one of claims 18 to 21, wherein the processor is further configured to:
determine the $Th_{RSRP}$, wherein the $Th_{RSRP}$ is determined based on the $prio_{Tx}$ and a priority $prio_{Rx}$ indicated in the first SCI.

23. The communication apparatus according to claim 17, wherein the determining the $S_A$ based on the first parameter set comprises:

step d: determining $S_A^{Initial}$ based on the first parameter set; and

step e: excluding a third resource from the $S_A^{Initial}$ based on the first parameter set, wherein the third resource is a time unit that is in the resource selection window and that is of a periodic resource corresponding to a time unit that is not sensed in a sensing window; and/or

step f: separately excluding, from the $S_A^{Initial}$ based on second SCI, a fourth resource corresponding to each parameter set, wherein a fourth resource i corresponding to the parameter set i is a reserved resource in the second SCI, an RSRP of the second SCI is greater than $Th_{RSRP,i}$ corresponding to the parameter set i, and the reserved resource in the second SCI is located in a time unit in the resource selection window; and
determining the $S_A$ based on at least one of a third resource corresponding to each parameter set and the fourth resource.

24. The communication apparatus according to claim 23, wherein the processor is further configured to:

after performing step e, if a ratio of a set of remaining resources to the $S_A^{Initial}$ is less than a second threshold i corresponding to **any** parameter set i, perform step d again.

25. The communication apparatus according to claim 23 or 24, wherein the processor is further configured to:

after performing step f, if a ratio of a set of remaining resources corresponding to any parameter set i to the $S_A^{Initial}$ is less than a second threshold i corresponding to the any parameter set i, increase the $Th_{RSRP,i}$ by a first step size, and perform step f again based on increased $Th_{RSRP,i}$, until ratios of sets of remaining resources corresponding to all parameter sets to the $S_A^{Initial}$ are greater than or equal to corresponding second thresholds i.

26. The communication apparatus according to any one of claims 23 to 25, wherein the determining the $S_A$ based on at least one of a third resource corresponding to each parameter set and the fourth resource comprises:

determining that $S_A = S_A^{initial} - U_{i=0}^{N-1}(S_A^{initial} - S_{A,i})$, wherein the $S_{A,i}$ is a set of remaining resources corresponding to the parameter set i, and U indicates taking a union set.

27. The communication apparatus according to any one of claims 23 to 26, wherein the processor is further configured to: determine the $Th_{RSRP,i}$, wherein the $Th_{RSRP,i}$ is determined based on the $prio_{Tx,i}$ and a priority $prio_{Rx}$ indicated in the first SCI.

28. The communication apparatus according to claim 16, wherein the determining an available resource set $S_A$ based on the N parameter sets comprises:

determining N initial available resource sets $S_{A,i}^{initial}$ and N available resource sets $S_{A,i}$ based on the N parameter sets respectively; and

determining that $S_A = \cap_{i=0}^{N-1} S_{A,i}^{initial} - U_{i=0}^{N-1}(S_{A,i}^{initial} - S_{A,i})$, wherein $\cap$ indicates taking an intersection set, and U indicates taking a union set.

29. The communication apparatus according to claim 17, wherein the determining an available resource set $S_A$ based on the N parameter sets comprises:

determining N available resource sets $S_{A,i}$ based on the N parameter sets respectively; and
determining the $S_A$ based on the $S_{A,i}$, wherein $S_A = \cap S_{A,i}$, and $\cap$ indicates taking an intersection set.

30. The communication apparatus according to any one of claims 16 to 29, wherein the sending the N pieces of data on a resource in the $S_A$ comprises: sending the N pieces of data on continuous resources in the $S_A$.

31. A computer-readable storage medium, storing instructions, wherein when the instructions are run on a computer, the computer is enabled to perform the method according to any one of claims 1 to 15.

FIG. 1

FIG. 2

FIG. 3

FIG. 4

FIG. 5

FIG. 6

S701: A terminal device obtains a data set, where each piece of data corresponds to one parameter set

S702: The terminal device determines an available resource set based on N parameter sets

S703: The terminal device reports the available resource set to a MAC layer, and the MAC layer selects a resource

S704: The terminal device sends N pieces of data on the selected resource

FIG. 7

EP 4 583 601 A1

S801: A terminal device determines a first parameter set based on N parameter sets

S802: The terminal device determines an initial available resource set based on the first parameter set

S803: The terminal device excludes a first resource from the initial available resource set

S803a: Is a ratio of a remaining resource in a resource selection window to a total resource in the resource selection window less than X?

Yes

No

S804: The terminal device excludes a second resource from the initial available resource set based on first sidelink control information SCI

Increase an RSRP threshold

S805: Is a ratio of a remaining resource in the resource selection window to the total resource in the resource selection window less than X?

Yes

No

S806: Determine that available resource set=initial available resource set–first resource–second resource

FIG. 8

42

S901: A terminal device determines a first parameter set based on N parameter sets

S902: The terminal device determines an initial available resource set based on the first parameter set

S903: The terminal device excludes a third resource from the initial available resource set

S903a: Is a ratio of a remaining resource in a resource selection window to a total resource in the resource selection window less than $\max(X_i)$?

Yes

No

S904: The terminal device separately excludes a fourth resource i from the initial available resource set based on second SCI

Increase an RSRP threshold i

S905: Is a ratio of a remaining resource I in the resource selection window to the total resource in the resource selection window less than Xi%?

Yes

No

S906: Determine that available resource set=initial available resource set–union set of (initial resource set–remaining resource i)

FIG. 9

S1001: A terminal device obtains a parameter set of each of N pieces of data, and performs S1002 to S1005 for each piece of data i

S1002: The terminal device determines an initial available resource set i based on a parameter set i

S1003: The terminal device excludes a fifth resource i from the initial available resource set i

S1003a: Is a ratio of a remaining resource i in a resource selection window to a total resource in the resource selection window less than Xi?

Yes

No

S1004: The terminal device excludes a sixth resource i from the initial available resource set i based on third SCI

Increase an RSRP threshold i

S1005: Is a ratio of a remaining resource i in the resource selection window to the total resource in the resource selection window less than Xi?

Yes

No

S1006: Determine an available resource set corresponding to the N pieces of data

FIG. 10

```
┌──────────┐                                          ┌──────────┐
│  First   │                                          │  Second  │
│ terminal │                                          │ terminal │
│  device  │                                          │  device  │
└──────────┘                                          └──────────┘
     │ ───────────── S1101: Fourth SCI ─────────────────▶ │
     │                                          ┌──────────────────┐
     │                                          │ S1102: Determine │
     │                                          │ that a COT sharing│
     │                                          │ condition is met │
     │                                          └──────────────────┘
     │                                          ┌──────────────────┐
     │                                          │ S1103: Determine │
     │                                          │   an available   │
     │                                          │   resource set   │
     │                                          └──────────────────┘
     │                                          ┌──────────────────┐
     │                                          │ S1104: Determine │
     │                                          │  the available   │
     │                                          │   resource set   │
     │                                          └──────────────────┘
     │ ◀──── S1104: COT sharing indication information ──── │
     │                                                     │
     │ ◀────────── S1105: N pieces of data ───────────────│
     │                                                     │
```

FIG. 11

```
┌───────────────────────────────────────────────────────┐
│           Available resource set 5 of the data 5       │
│  ┌────────────────────────────────────────────────────┐│
│  │        Available resource set 4 of the data 4       ││
│  │  ┌─────────────────────────────────────────────────┐│
│  │  │     Available resource set 3 of the data 3       ││
│  │  │  ┌──────────────────────────────────────────────┐│
│  │  │  │    Available resource set 2 of the data 2     ││
│  │  │  │  ┌───────────────────────────────────────────┐│
│  │  │  │  │   Available resource set 1 of the data 1   ││
│  │  │  │  └───────────────────────────────────────────┘│
```

Data 1    Data 2    ← COT sharing →    Data 3    Data 4    Data 5    ...

$n+T_1$   $n+T_1+1$   $n+T_1+2$   $n+T_1+3$   $n+T_1+4$   $n+T_1+5$   $n+T_1+6$   $n+T_1+7$

Slot

FIG. 12a

FIG. 12b

S$_{A,0}$

S$_{A,1}$

S$_{A,2}$

TO
FIG.
12c-2

n+T$_1$+1    n+T$_1$+3    n+T$_1$+5    n+T$_1$+7

n+T$_1$    n+T$_1$+2    n+T$_1$+4    n+T$_1$+6    n+T$_1$+8

Shared
resource

Available
resource

Excluded
resource

FIG. 12c-1

CONT.
FROM
FIG.
12c-1

COT sharing

Data 0

Data 1

Retransmission
data 0

Retransmission
data 1

$n+T_1$    $n+T_1+1$    $n+T_1+2$    $n+T_1+3$    $n+T_1+4$    $n+T_1+5$

$n+T_1+2$

Resource reserved by
a terminal device 0

$n+T_1+3$

Resource reserved by
a terminal device 1

FIG. 12c-2

Resource reserved by a terminal device 0 in $n+T_1+2$

Resource reserved by a terminal device 1 in $n+T_1+3$

$S_A$

$n+T_1$ $n+T_1+1$ $n+T_1+2$ $n+T_1+3$ $n+T_1+4$ $n+T_1+5$ $n+T_1+6$ $n+T_1+7$ $n+T_1+8$

← COT sharing →

Data 0

Data 1

Retransmission data 0

Retransmission data 1

$n+T_1$ $n+T_1+1$ $n+T_1+2$ $n+T_1+3$ $n+T_1+4$ $n+T_1+5$

Available resource

Excluded resource

Shared resource

FIG. 12d

FIG. 13

FIG. 14

## INTERNATIONAL SEARCH REPORT

| | International application No. |
|---|---|
| | **PCT/CN2023/117640** |

**A. CLASSIFICATION OF SUBJECT MATTER**

H04W 72/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, DWPI, CNABS, ENTXTC, VEN: 参数, 集合, 资源, 选择窗, 优先级, 时延, 频域, 数据, 对应, 信道接入, parameter, aggregate, resource, select window, priority, delay, data

**C. DOCUMENTS CONSIDERED TO BE RELEVANT**

| Category* | Citation of document, with indication, where appropriate, of the relevant passages | Relevant to claim No. |
|---|---|---|
| A | CN 111148223 A (HUAWEI TECHNOLOGIES CO., LTD.) 12 May 2020 (2020-05-12) description, paragraphs 6-61 | 1-31 |
| A | CN 113543236 A (VIVO COMMUNICATION TECHNOLOGY CO., LTD.) 22 October 2021 (2021-10-22) entire document | 1-31 |
| A | CN 113840379 A (HUAWEI TECHNOLOGIES CO., LTD.) 24 December 2021 (2021-12-24) entire document | 1-31 |
| A | WO 2021134863 A1 (GUANGDONG OPPO MOBILE TELECOMMUNICATIONS CORP., LTD.) 08 July 2021 (2021-07-08) entire document | 1-31 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2023** | **24 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 111148223 | A | 12 May 2020 | WO | 2020088678 | A1 | 07 May 2020 |
| | | | | US | 2021258921 | A1 | 19 August 2021 |
| | | | | EP | 3852456 | A1 | 21 July 2021 |
| CN | 113543236 | A | 22 October 2021 | WO | 2021209022 | A1 | 21 October 2021 |
| | | | | US | 2023015263 | A1 | 19 January 2023 |
| | | | | IN | 202217063480 | A | 10 February 2023 |
| | | | | EP | 4138451 | A1 | 22 February 2023 |
| | | | | JP | 2023521399 | W | 24 May 2023 |
| CN | 113840379 | A | 24 December 2021 | WO | 2021259256 | A1 | 30 December 2021 |
| WO | 2021134863 | A1 | 08 July 2021 | WO | 2021134283 | A1 | 08 July 2021 |
| | | | | CN | 114424656 | A | 29 April 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211199994

- CN 202211377739